# EUROPÄISCHE PATENTSCHRIFT

(11) **EP 4 370 276 B1**
(45) Veröffentlichungstag und Bekanntmachung des Hinweises auf die Patenterteilung: **23.09.2026**
(21) Anmeldenummer: 22747652.0
(22) Anmeldetag: 07.07.2022
(51) Int. Cl.: B23K 26/082, B23K 26/08, B23K 26/142

(54) **VORRICHTUNG ZUM SCHNEIDEN ODER PERFORIEREN EINER MATERIALBAHN FÜR DIE ENERGIEZELLEN PRODUZIERENDE INDUSTRIE**
DEVICE FOR CUTTING OR PERFORATING A MATERIAL WEB FOR THE ENERGY CELL PRODUCTION INDUSTRY
DISPOSITIF DE DÉCOUPE OU DE PERFORATION D'UNE BANDE DE MATÉRIAU POUR L'INDUSTRIE PRODUISANT DES CELLULES ÉNERGÉTIQUES

(30) Priorität: 12.07.2021 DE 102021207353
(43) Veröffentlichungstag der Anmeldung: 22.05.2024
(73) Patentinhaber: Körber Technologies GmbH, 21033 Hamburg (DE)
(72) Erfinder: KREYSERN, Jan, 21075 Hamburg (DE); MEINKE, Karsten, 23879 Mölln (DE); WAGNER, Marcus, 22159 Hamburg (DE); HOFMANN, Nils, 28870 Ottersberg (DE); GRASSMEL, Ralf, 21635 Jork (DE)
(74) Vertreter: Müller Verweyen
(86) Internationale Anmeldenummer: PCT/EP2022/068880
(87) Internationale Veröffentlichungsnummer: WO 2023/285273

(56) Entgegenhaltungen:
- EP-A1- 0 281 686
- EP-A1- 0 329 438
- EP-A1- 3 628 435
- DE-A1- 102014 104 476
- JP-A- 2003 334 673
- US-A- 3 523 160
- US-A1- 2020 246 919

## Beschreibung

Die vorliegende Erfindung betrifft eine Vorrichtung zum Schneiden oder Perforieren einer Materialbahn für die Energiezellen produzierende Industrie, umfassend einen rotierbaren Schneidkörper, insbesondere eine Schneidtrommel, auf der eine Materialbahn in einer Transportrichtung transportiert wird, und eine Laserschneideinrichtung zum Schneiden der Materialbahn quer zu der Transportrichtung zur Erzeugung einzelner Bahnsegmente mittels eines Laserstrahls.

Es ist bekannt, Materialbahnen für die Energiezellen produzierende Industrie, beispielsweise Elektrodenbahnen und Separatorbahnen, mittels eines Laserstrahls zu schneiden, um einzelne Segmente, beispielsweise Elektroden und Separatoren, aus der Materialbahn zu erzeugen.

Die ungeschnittene Materialbahn kann auf einem Bandförderer transportiert und geschnitten werden. Dies ist beispielsweise aus der WO 2016 041713 A1 bekannt. Bei einem Schnitt durch die Materialbahn würde man ggf. auch das Transportband durchschneiden; ein Weitertransport wäre dann nicht mehr möglich. Außerdem ist das Transportband als Vakuumband ausgestaltet, um die Materialbahn und die geschnittenen Segmente sicher und positionsgenau zu transportieren. Die Ausführung als Vakuumband ist jedoch sehr aufwändig.

Es ist auch bekannt, eine Materialbahn auf einem Vakuumrad bzw. einer Unterdruckwalze mittels eines Laserstrahls zu schneiden, siehe beispielsweise DE 10 2017 216 213 A1 und WO 2020/192845 A1. Soll auf Trommeln oder Walzen geführtes Material, das in Bahnen zur Verfügung steht, mit gleichbleibender Schnittqualität mittels eines Laserstrahls geschnitten oder perforiert werden, so besteht das Problem, das Material über die gesamte Bahnbreite im Fokus des bearbeitenden Laserstrahls zu halten. Laserschneideinrichtungen, die von außen auf freiliegendes Bahnmaterial treffen, bergen zudem die Gefahr erhöhter Kontamination der Oberfläche mit Abbrandprodukten und erschweren es, die entstehenden Partikel gezielt abzusaugen bzw. wegzublasen.

EP 3 628 435 A1, JP 2003 334673 A, EP 0 281 686 A1, DE 10 2014 104 476 A1, EP 0 329 438 A1 und US 2020/246919 A1 offenbaren unterschiedliche Vorrichtungen zum Schneiden oder Perforieren einer Materialbahn. Der JP2003334673 ist eine Vorrichtung nach dem Oberbegriff des Anspruchs 1 zu entnehmen.

Der Erfindung liegt die Aufgabe zugrunde, eine Vorrichtung zum Schneiden einer Materialbahn bereitzustellen, die oberflächenschonend ist, einen gleichmäßigen Schnitt erzeugt und/oder bei der Verschmutzung der Oberflächen sowie die mit einem scharfkantigen Schnittprodukt verbundenen Nachteile vermieden oder zumindest erheblich reduziert werden.

Die Erfindung löst diese Aufgabe mit den Merkmalen des Anspruchs 1.

Erfindungsgemäß ist die Laserschneideinrichtung so angeordnet und eingerichtet, dass der Laserstrahl vom Körperinneren, insbesondere Trommelinneren auf die Mantelfläche des Schneidkörpers gerichtet ist. Der Schneidkörper kann als Schneidtrommel ausgebildet sein. Der Schneidkörper weist erfindungsgemäß eine Durchtrittsöffnung auf. Der vom Körperinneren, insbesondere Trommelinneren nach außen durch die Durchtrittsöffnung tretende Laserstrahl trifft auf die zu schneidende Materialbahn. Erfindungsgemäß wird somit aus dem Innenraum des Schneidkörpers, d.h. dem von dem Mantel des Schneidkörpers eingeschlossenen Raum, heraus geschnitten. Auf diese Weise kann erfindungsgemäß der Schnittwinkel α zwischen dem Laserstrahl und der Normalen zur Materialbahnebene in einer Ebene senkrecht zur Rotationsachse des Schneidkörpers erheblich reduziert werden im Vergleich zu einem Schneiden von außen wie im Stand der Technik.

Das Schneiden der Materialbahn umfasst im Rahmen der Erfindung begrifflich generell auch das Perforieren der Materialbahn, was als punkt- oder streckenförmiges Schneiden zu verstehen ist. Die Rotationsachse des Schneidkörpers wird im Folgenden auch als Körperachse, insbesondere Trommelachse bezeichnet. Generell ist die Erfindung nicht auf das Schneiden einer Elektrodenbahn beschränkt, sondern beispielsweise auch auf das Schneiden einer Separator-Elektroden-Verbundbahn und allgemeiner einer Einschicht- oder Mehrschichtbahn anwendbar.

Der Erfindung kann durch Anordnung des Austrittspunkts oder des letztes Umlenkpunkts im Inneren der Schneidtrommel umgesetzt werden. Der Austrittspunkt ist der Punkt, an dem der Laserstrahl aus dem optischen Strahlführungssystem austritt. In der Regel ist der Austrittspunkt der Ort, an dem der Laserstrahl zuletzt durch ein Strahlumlenkelement, beispielsweise einen Scanner oder Spiegel, gegebenenfalls umgelenkt wird (letzter Umlenkpunkt oder kurz Umlenkpunkt), bevor er auf die zu schneidende Materialbahn trifft. Auf die Position des Lasers, d.h. des Laserstrahlerzeugers, selbst kommt es im Rahmen der Erfindung generell nicht an, dieser kann nach Bauraumanforderungen innerhalb oder außerhalb der Schneidtrommel angeordnet sein und im letzteren Fall beispielsweise axial oder axialparallel bzw. kollinear in den Schneidkörper einstrahlen.

Besonders vorteilhaft ist die Laserschneideinrichtung so angeordnet und eingerichtet, dass der Laserstrahl von der Rotationsachse des Schneidkörpers ausgehend auf die Materialbahn trifft. Dies kann durch Anordnung des Austritts- oder Umlenkpunkts auf der Mittel- oder Rotationsachse des Schneidkörpers, d.h. in einem Querschnitt in dem Körpermittelpunkt, insbesondere Trommelmittelpunkt des Schneidkörpers, erreicht werden. Hierdurch kann eine rechtwinklige Schnittfläche erzeugt werden, da in dieser Ausführungsform zu jedem Zeitpunkt des Schneidvorgangs der oben genannte Schnittwinkel α gleich Null ist. Mit anderen Worten, aufgrund des aus der Körperachse, insbesondere Trommelachse kommenden Laserstrahles trifft dieser in einer Ebene senkrecht zu der Rotationsachse immer senkrecht auf das zu schneidendende Material. Eine von der Rotationsachse des Schneidkörpers abweichende Positionierung des Austritts- oder Umlenkpunkts ist möglich, wenn ein von Null abweichender geringer Schnittwinkel α tolerierbar ist.

Erfindungsgemäß wird das Bahnmaterial geschnitten, während es auf dem Schneidkörper, insbesondere der beispielsweise zylindrischen Schneidtrommel aufliegt. Durch die auf der Körperoberfläche, insbesondere Trommeloberfläche aufliegende Anordnung der zu schneidenden Materialbahn und dem von innen kommenden Laserstrahl verbleibt ein Großteil der Abbrandprodukte in einem engen räumlichen Umfeld, nämlich dem Körperinneren, insbesondere Trommelinneren, und kann daher verhältnismäßig gut abgesaugt werden. Erfindungsgemäß kann daher eine Absaugeinrichtung vorgesehen sein, die zum Absaugen durch das Laserschneiden erzeugter Partikel aus dem Körperinneren, insbesondere Trommelinneren angeordnet und eingerichtet ist. Hierdurch kann eine Kontamination der Oberfläche weitestgehend vermieden werden. Die Absaugeinrichtung ist vorzugsweise zwischen dem Körpermantel, insbesondere

Trommelmantel und der Laserschneideinrichtung und entweder umlaufend, ortsstabil oder bevorzugt der Orientierung des austretenden Laserstrahls folgend angeordnet, was später genauer erläutert wird. Die Absaugeinrichtung ermöglicht es zuverlässig, die entstehenden Abbrandmaterialien bzw. Partikel einerseits von optischen Elementen der Laserschneideinrichtung fernzuhalten und andererseits möglichst vollständig abzusaugen. Die Absaugeinrichtung kann als Teil des Schneidkörpers oder als Teil der Laserschneideinrichtung ausgelegt sein.

Gemäß der Erfindung ist mindestens ein Teil der Laserschneideinrichtung entlang oder parallel zu der Rotationsachse des Schneidkörpers linear verschiebbar gelagert. Diesem Aspekt der Erfindung liegt die Aufgabe zugrunde, eine gleichbleibende hohe Schnittqualität unabhängig von der Transport- bzw. Produktionsgeschwindigkeit der Materialbahn (Bahngeschwindigkeit) zu erzielen. Die Verschiebung des Strahlumlenkungselements erfolgt vorteilhaft mittels einer Linearantriebseinheit und/oder einer Linearachse, während die Materialbahn auf dem Schneidkörper transportiert wird, und vorzugsweise mit konstanter Geschwindigkeit, um eine bevorzugte konstante Schnittgeschwindigkeit und damit eine gleichbleibende Schnittqualität unabhängig von der Bahngeschwindigkeit zu erreichen. Die Verschiebegeschwindigkeit kann in Grenzen zur Erzielung eines optimalen Schnittergebnisses gewählt werden. Eine Anpassung an die Bahngeschwindigkeit kann mittels einer nachfolgend genauer beschriebenen Schwenk- oder Drehbewegung um die Rotationsachse des Schneidkörpers erfolgen. Die Entkopplung der linearen Verschiebung von der Schwenk- oder Drehbewegung ermöglicht eine gleichmäßige oder konstante, von der Produktions- bzw. Bahngeschwindigkeit endkoppelte Schneidgeschwindigkeit und dadurch eine gleichbleibende hohe Schnittqualität.

Der verschiebbare Teil der Laserschneideinrichtung ist vorzugsweise ein Strahlumlenkelement zur Umlenkung des Laserstrahls. Es ist aber auch denkbar, dass der Laser selbst oder die gesamte Laserschneideinrichtung verschiebbar ist.

Um einen geraden Schnitt senkrecht zu der Transportrichtung zu erzielen, während die Materialbahn auf dem Schneidkörper transportiert wird, ist vorzugsweise mindestens ein Teil der Laserschneideinrichtung um die Rotationsachse des Schneidkörpers dreh- oder schwenkbar gelagert. Zu diesem Zweck weist die Vorrichtung vorteilhaft einen Dreh- oder Schwenkantrieb zum Drehen oder Schwenken des dreh- oder schwenkbaren Teils der Laserschneideinrichtung während des Schnitts auf. Der dreh- oder schwenkbare Teil der Laserschneideinrichtung ist vorzugsweise ein Strahlumlenkelement zur Umlenkung des Laserstrahls. Es ist aber auch denkbar, dass der Laser selbst oder die gesamte Laserschneideinrichtung dreh- oder schwenkbar ist.

In der zuvor beschriebenen Ausführungsform wird die Materialbahn infolge der linearen Verschiebung und/oder der Drehung oder Schwenkung eines Teils oder von Teilen der Laserschneideinrichtung geschnitten.

Der zuvor beschriebene Aspekt eines linear verschiebbaren Teils der Laserschneideinrichtung lässt sich dahingehend verallgemeinern, dass die Laserschneideinrichtung vorzugsweise zum linearen und zu der Rotationsachse des Schneidkörpers parallelen Verschieben des auf die zu schneidende Materialbahn fallenden Laserstrahls eingerichtet ist.

Realisiert werden kann dadurch ein thermisches Querschneiden mit konstanter, vergleichsweise hoher Schnittgeschwindigkeit und relativ langsamem Nachführen des Laserstrahls in Produktions- oder Transportrichtung, abhängig von der Produktionsgeschwindigkeit.

In einer weiteren vorteilhaften Ausführungsform dieses Aspekts weist die Laserschneideinrichtung einen rotierbaren Helixspiegel auf, mit dem eine lineare Verschiebung des auf die zu schneidende Materialbahn fallenden Laserstrahls in einer zur der Körper- oder Trommelachse parallelen Verschieberichtung vorteilhaft realisiert werden kann. Eine Helix- oder Wendelfläche des Helixspiegels ist mindestens einseitig verspiegelt. Der Laserstrahl fällt auf die verspiegelte Wendelfläche des Helixspiegels ein und wird von diesem umgelenkt. Aufgrund der Rotation des Helixspiegels um seine Mittelachse tritt der an der Wendelfläche gespiegelte Laserstrahl an unterschiedlichen Axialpositionen aus dem Helixspiegel aus. Diese lineare Verschiebung des aus dem Helixspiegel austretenden Laserstrahls kann direkt oder über ein Umlenkelement zum Überstreichen der zu schneidenden Materialbahn mit dem Laserstrahl, und somit zum Schneiden der Materialbahn, in Querrichtung eingesetzt werden. Da der Helixspiegel im Betrieb vorzugsweise mit konstanter Drehzahl betrieben werden kann und das Umschalten des Schneidstrahles von Schnittende auf den nächsten Schnittbeginn automatisch über die Drehbewegung des Helixspiegels erfolgt, können problemlos hohe Schnittgeschwindigkeiten realisiert werden.

Zum Ausgleich der Rotationsbewegung des Schneidkörpers während des Schneidens weist die Laserschneideinrichtung vorteilhaft ein im Strahlengang vor dem Helixspiegel angeordnetes, beispielsweise einachsiges Scanelement auf. Das Scanelement ist um mindestens eine Schwenkachse schwenkbar. Das Scanelement ist positionsgenau zur Lage des Schneidkörpers ausgerichtet und wird dem Schneidkörper in Abhängigkeit der Produktions- oder Rotationsgeschwindigkeit nachgeführt. Der von dem Scanelement ausgehende Laserstrahl kann infolge der Verstellung durch das Scanelement radial auf der Wendelfläche des Helixspiegels laufen, von innen nach außen oder umgekehrt. Das Scanelement kann vorzugsweise ein elektromagnetisch verstellbarer Spiegel sein, beispielsweise ein Galvanometerscanner. Andere Ausführungen des Scanelements sind möglich, beispielsweise in Form von Piezoaktoren.

Mit dem zuvor beschriebenen Aufbau mit Helixspiegel und vorgeordnetem Scanelement ist es möglich, die erforderlichen Schnittgeschwindigkeiten zu realisieren und den Laserstrahl entsprechend dem Schneidkörper nachzuführen. Gelöst wird die zugrundeliegende Aufgabe demnach durch den Einsatz eines Helixspiegels für die schnelle Achse und den Einsatz eines Scanelements für die langsame Achse.

Die Fokussierung des Laserstrahls kann beispielsweise mittels mindestens einer Linse, insbesondere einer Zylinderlinse erfolgen, die zwischen dem Scanelement und dem Helixspiegel im Strahlengang angeordnet ist. Der Helixspiegel ist dabei vorzugsweise so angeordnet, dass die Länge des Strahlwegs vom (ersten) Fokuspunkt bis zum Produkt unabhängig von der Rotation des Helixspiegels immer konstant ist. In einer Ausführungsform ist eine weitere Zylinderlinse in Strahlrichtung vor dem Schneidkörper angeordnet.

Eine thermische Schneideinrichtung mit konstanter Brennweite und lineares Schneiden quer zum Materialtransport können somit ohne Verwendung eines herkömmlichen X-Y-Scanners oder eines Polygons, sowie der damit notwendigen teureren Feldlinse, insbesondere f-Theta-Linse, erreicht werden.

Vorzugsweise ist mindestens ein Teil der Absaugeinrichtung gemeinsam mit dem Laserstrahl oder mit einem beweglichen Element der Laserschneideinrichtung verschiebbar und/oder dreh- oder schwenkbar gelagert. Beispielsweise kann ein Teil der Absaugeinrichtung mit einem beweglichen Element der Laserschneideinrichtung verbunden sein. Dies gestattet eine zielgenaue Absaugung der Partikel am Ort ihrer Entstehung, nämlich dort, wo der Laserstrahl auf die Materialbahn auftrifft. Bevorzugt wird eine mitschwenkende Absaugung- und/oder Drucklufteinheit ausgeführt, um den Verschmutzungsbereich möglichst klein zu halten. Der Bereich der Absaugung und/oder Druckluft kann nah am Produkt positioniert sein, um dort effizient zu arbeiten.

In vorteilhaften Ausführungsformen kann der verschiebbare und/oder dreh- oder schwenkbare Teil der Laserschneideinrichtung mindestens ein Strahlumlenkelement, insbesondere ein nichtschwenkbares, einachsig schwenkbares oder zweiachsig schwenkbares Spiegelelement, ein Polygonspiegelelement und/oder eine Polygonspiegelwalze umfassen.

Nach dem zuvor Gesagten verläuft der Laserstrahl idealerweise kollinear zur Körperachse, insbesondere Trommelachse und die Schneideinrichtung ist vorteilhaft so ausgeführt, dass ein Teil oder Teile der Schneideinrichtung zum einen um die Körperachse, insbesondere Trommelachse im erforderlichen Maß geschwenkt oder gedreht, und zum anderen parallel zu der Körperachse, insbesondere Trommelachse verfahren bzw. verschoben werden kann bzw. können, wobei die Verfahrgeschwindigkeit über die Bahnbreite vorzugsweise möglichst konstant gehalten wird. Die beschriebene Anordnung bietet weiterhin den Vorteil, dass die Materialbahn in einem festen Abstand zu der Laserschneidvorrichtung bewegt werden kann. Sich daraus ergebende Vorteile sind ein kleiner Fokusdurchmesser, was zu hoher Energiedichte im Fokuspunkt führt und den Einsatz vergleichsweise leistungsschwacher bzw. energieeffizienter Strahlquellen erlaubt. Je nach gewählter bzw. erforderlicher Schnittgeschwindigkeit kann das Schneidverfahren unabhängig von der eingesetzten Laserstrahlquelle, d.h. cw oder gepulst, verwendet werden. Somit ist eine Flexibilität bei der Wahl der Strahlquelle über die Wahl der gewünschten Schnittgeschwindigkeit gegeben. Der beschriebene Aufbau ist zudem verhältnismäßig leicht auf unterschiedliche Bahnbreiten der zu schneidenden Materialbahn skalierbar.

Die lineare Verschiebbarkeit eines Teils oder von Teilen der Laserschneideinrichtung parallel zu der Körperachse, insbesondere Trommelachse, vorteilhaft in Kombination mit Dreh- oder Schwenkbarkeit um die Körperachse, insbesondere Trommelachse, ist vorteilhaft kombinierbar mit dem Gegenstand der Ansprüche 1 und 2, d.h. dem Schneiden der Materialbahn aus dem Inneren des Schneidkörpers heraus, oder von der Körperachse, insbesondere Trommelachse ausgehend. Es sind aber Ausführungsformen mit linearer Verschiebbarkeit eines Teils oder von Teilen der Laserschneideinrichtung parallel zu der Körperachse, insbesondere Trommelachse, vorteilhaft in Kombination mit Dreh- oder Schwenkbarkeit um die Körperachse, insbesondere Trommelachse, möglich, bei der der Laserstrahl von außen auf das zu schneidende Bahnmaterial fällt. In diesen Ausführungsformen sind Durchtrittsöffnungen in dem Mantel des Schneidkörpers entbehrlich.

Das Bahnmaterial kann vorzugsweise durch Unterdruck bzw. Vakuum, zusätzlich oder alternativ auch mechanisch beispielsweise durch Greifer, auf dem Schneidkörper gehalten werden. Auf diese Weise können auch die geschnittenen Segmente sicher auf dem Schneidkörper gehalten werden. Relativgeschwindigkeiten bzw. Schlupf zwischen dem Schneidkörper und den Segmenten wird vorteilhaft vermieden. Der Schneidkörper erfüllt somit mehrere Funktionen: er hält und transportiert zunächst die nicht geschnittene Materialbahn; er hält und transportiert sodann auch die geschnittenen Segmente; und er stellt die Durchtrittsöffnung bereit, durch die der Laserstrahl nach außen durch den Körpermantel, insbesondere Trommelmantel hindurchtreten kann, um die Materialbahn zu schneiden. Die beiden erstgenannten Funktionen werden vorzugsweise über Vakuum, zusätzlich oder alternativ über mechanische Elemente wie Greifer ausgeführt.

Der Schneidkörper weist zudem vorzugsweise mindestens eine Durchtrittsöffnung auf, durch die der Laserstrahl von innen nach außen durch den Körpermantel, insbesondere Trommelmantel hindurchtreten und die auf dem Schneidkörper gehaltene Materialbahn schneiden kann. Vorzugsweise ist die mindestens eine Durchtrittsöffnung ein sich quer über die Breite des Schneidkörpers erstreckender Spalt in der Mantelfläche des Schneidkörpers.

Vorzugsweise weist der Schneidkörper eine Mehrzahl von Durchtrittsöffnungen auf, die jeweils den gleichen Winkelabstand voneinander aufweisen. Die somit gleichförmige Teilung des Schneidkörpers entspricht vorteilhaft der Ausdehnung der Segmente in Transportrichtung. Auf diese Weise kann endlos fortlaufend ohne Versatz und ohne Unterbrechung durch die Durchtrittsöffnungen des Schneidkörpers geschnitten werden.

Vorzugsweise ist zusätzlich oder alternativ zu der Absaugeinrichtung eine Drucklufteinrichtung zum Wegblasen von der Laserschneideinrichtung erzeugter Partikel, insbesondere mittels einer Querluftströmung, vorgesehen. Insbesondere beim Laserschneiden aus dem Körperinneren, insbesondere Trommelinneren heraus ist es möglich, eine Absaugeinrichtung mit zusätzlicher durch die Drucklufteinrichtung erzeugter Querluft senkrecht zum Laserstrahl in einem eng begrenzten Bauraum, nämlich im Körperinneren, insbesondere Trommelinneren zu integrieren.

Alternativ oder zusätzlich ist erfindungsgemäß außen über dem Schneidkörper eine feststehende oder sich mitbewegende Absaugvorrichtung zum Absaugen durch das Laserschneiden erzeugter Partikel vorzugsweise angeordnet. Auch eine oberhalb des Schnittbereiches und außerhalb des Schneidkörpers anzubringende Strahlfalle kann als eine solche Absaugvorrichtung ausgeführt sein. Des Weiteren kann die mindestens eine Durchtrittsöffnung in dem Körpermantel, insbesondere Trommelmantel vorzugsweise zur Schneidstaubabsaugung und/oder gegebenenfalls als Prozessgaszufuhr dienen.

Es ist möglich, den Prozessschritt des Laserschneidens an mehreren Positionen, die an unterschiedlichen Umfangspositionen des Schneidkörpers angeordnet sind, mittels einer Mehrzahl von Laserschneideinrichtungen alternierend oder parallel durchzuführen.

In einer weiteren vorteilhaften Ausführungsform kann der Prozessschritt des Laserschneidens auf mehrere Schneidkörper, insbesondere Schneidtrommeln verteilt werden. Die erfindungsgemäße Vorrichtung weist in dieser Ausführungsform vorteilhaft mindestens einen weiteren Schneidkörper, insbesondere eine weitere Schneidtrommel und mindestens eine weitere Laserschneideinrichtung auf. Der weitere Schneidkörper kann als weitere Schneidtrommel ausgebildet sein. Der weitere Schneidkörper weist vorzugsweise eines oder mehrere Merkmale des zuvor beschriebenen Schneidkörpers auf. Insbesondere kann der Körpermantel, insbesondere Trommelmantel des weiteren Schneidkörpers eine oder mehrere Durchtrittsöffnungen wie zuvor beschrieben aufweisen.

Die weitere Laserschneideinrichtung weist vorzugsweise eines oder mehrere Merkmale der zuvor beschriebenen Laserschneideinrichtung auf. Insbesondere kann die weitere Laserschneideinrichtung so angeordnet und eingerichtet sein, dass ihr Laserstrahl aus einem Körperinneren, insbesondere Trommelinneren des weiteren Schneidkörpers heraus auf einen Körpermantel, insbesondere Trommelmantel des weiteren Schneidkörpers gerichtet ist, und der aus dem Körperinneren, insbesondere Trommelinneren, vorzugsweise von der Rotationsachse ausgehend, durch mindestens eine Durchtrittsöffnung in dem Körpermantel, insbesondere Trommelmantel nach außen tretende Laserstrahl auf die zu schneidende Materialbahn trifft. Vorzugsweise ist mindestens ein Teil der weiteren Laserschneideinrichtung parallel zu der Rotationsachse des weiteren Schneidkörpers linear verschiebbar gelagert.

Vorzugsweise ist mindestens ein Teil der weiteren Laserschneideinrichtung um die Rotationsachse des weiteren Schneidkörpers, oder um eine dazu parallele Dreh- oder Schwenkachse, dreh- oder schwenkbar gelagert. Besonders vorteilhaft kann es sein, wenn ein Teil der weiteren Laserschneideinrichtung um volle 360° drehbar ist, wodurch die mit einem Hin- und Herschwenken verbundene Totzeit erheblich reduziert werden kann. Die Drehbewegung kann mit nicht-konstanter Geschwindigkeit, d.h. mit periodischen Brems- und Beschleunigungsvorgängen, ausgeführt werden. Vorzugsweise sind die Schneidkörper und/oder mindestens ein Teil der Laserschneideinrichtungen zur Schwenkung oder Rotation mit nicht-konstanter Rotationsgeschwindigkeit, insbesondere mit periodischen Brems- und Beschleunigungsvorgängen, eingerichtet.

Die Laserschneideinrichtungen können separate Einrichtungen sein und jeweils eigene Laser und Strahlführungssysteme aufweisen. Alternativ können die Laserschneideinrichtungen bestimmte Elemente gemeinsam nutzen, beispielsweise einen Laser als Strahlerzeuger für beide Schneidkörper.

In der beschriebenen Ausführungsform ist die Taktzeit der Materialbahnförderung vorteilhaft von der Schneidgeschwindigkeit entkoppelt. Durch die Verteilung des Schneidprozesses auf mehrere Schneidkörper kann trotz ggf. vorgesehener (Rück-) Schwenkung oder Drehung und damit verbundener Totzeit eine hohe Schneidrate erreicht werden. Durch Wahl des Körperdurchmessers, insbesondere Trommeldurchmessers, Rotationsgeschwindigkeit und Umschlingung der Schneidkörper mit Bahnmaterial kann die Schneidgeschwindigkeit wie gewünscht eingestellt und ggf. dynamisch angepasst werden, und zwar in gewissen Grenzen unabhängig von der Taktzeit der Materialbahnförderung, d.h. unabhängig von der Rotationsgeschwindigkeit der Schneidkörper.

In einer einfachen Ausführungsform wird auf jedem Schneidkörper alle n Takte ein Schnitt gemacht, wobei n der Körperanzahl, insbesondere Trommelanzahl entspricht, und danach wieder zurückgeschwenkt. Die Taktzeit entspricht hierbei der Zeit, die das zu schneidende Endlosbahnmaterial benötigt, um den Weg zurückzulegen, die ein geschnittenes Endprodukt (Segment) breit ist. Damit kann die für verschiedene Prozessschritte, insbesondere das Schneiden und/oder das Zurückschwenken auf die Ausgangsposition, zur Verfügung stehende Zeitdauer deutlich vergrößert werden, und zwar um die Zeit s = (n-1)·t, wobei s der Zeitgewinn ist, n die Körperanzahl, insbesondere Trommelanzahl und t die Taktzeit. Das bedeutet, dass man mit jedem Körper eine Taktzeit hinzugewinnt, insbesondere um die Rückschwenkbewegung ausführen zu können. Die Prozessschritte, insbesondere das Schneiden und/oder das Zurückschwenken, können auf die Gesamtzeit s + t aufgeteilt werden.

Bei einer Erhöhung der Bahngeschwindigkeit verringert sich die Taktzeit weiter. Bei gleichbleibender Laserschnittgeschwindigkeit würde weniger Zeit für die Rückschwenkbewegung bleiben (eine höhere Laserschnittgeschwindigkeit resultiert in einem kleineren Anteil des Vorwärtsschwenkens und des Verfahrens der Lineareinheit an einem Takt). Eine langsamere Laserschnittgeschwindigkeit bewirkt das Gegenteil und reduziert die verbleibende Zeit für den Rückwärtsschwenk. Durch eine Erhöhung der Anzahl der Schneidkörper besteht hier die Möglichkeit, den Prozess so zu verlängern, dass mehr als eine Taktzeit für die Vorwärtsbewegung und die Bewegung des Linearantriebs genutzt werden kann. Eine deutlich geringere Laserschnittgeschwindigkeit ist daher vorteilhaft möglich. Eine Randbedingung ist hierbei, dass Schnitt und Zurückschwenken innerhalb der Zeitdauer s + t abgeschlossenen sind.

Die Erfindung wird im Folgenden anhand bevorzugter Ausführungsformen unter Bezugnahme auf die beigefügten Figuren erläutert. Dabei zeigt
- Fig. 1: eine Ansicht auf eine in Transportrichtung T geförderte Materialbahn im Bereich einer Laserschneidvorrichtung;
- Fig. 2: eine Seitenansicht einer in einer Ebene geförderten Materialbahn im Bereich einer Laserschneidvorrichtung;
- Fig. 3: eine perspektivische Ansicht eines mittels der Laserschneidvorrichtung gemäß Figuren 1 und 2 geschnittenen Bahnsegments;
- Fig. 4: eine Querschnittsansicht einer Schneidtrommel mit einer darauf geförderten Materialbahn und einer von außen schneidenden Laserschneidvorrichtung;
- Fig. 5: eine Querschnittsansicht einer Schneidtrommel mit darauf geförderter Materialbahn und einer aus dem Trommelinneren heraus schneidenden Laserschneidvorrichtung;
- Fig. 6: eine perspektivische Ansicht einer Schneidvorrichtung in einer bevorzugten Ausführungsform;
- Fig. 7: eine Ansicht der Schneidvorrichtung aus Figur 6 etwa entlang der Trommelachse;
- Fig. 8-11: eine perspektivische Ansicht einer erfindungsgemäßen Schneidvorrichtung in weiteren vorteilhaften Ausführungsformen;
- Fig. 12-13: eine perspektivische Ansicht einer nicht erfindungsgemäßen Schneidvorrichtung in weiteren nicht erfindungsgemäßen Ausführungsformen;
- Fig. 14A-14G: eine schematische Darstellung des Ablaufs eines Schneidverfahrens auf einer Mehrzahl von Schneidtrommeln;
- Fig. 15: eine perspektivische Ansicht einer Laserschneidvorrichtung in einer weiteren vorteilhaften Ausführungsform; und
- Fig. 16: eine perspektivische Ansicht einer Schneidtrommel und einer von innen schneidenden Laserschneidvorrichtung gemäß Figur 15.

In den im Folgenden beschriebenen Ausführungsbeispielen ist der Schneidkörper als Schneidtrommel 10 und der weitere Schneidkörper als weitere Schneidtrommel 38 ausgebildet.

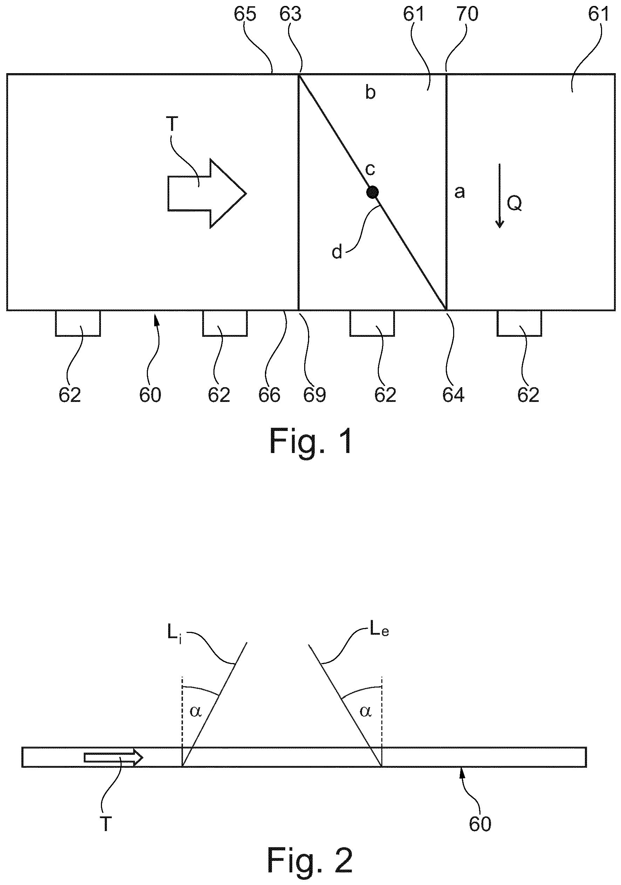

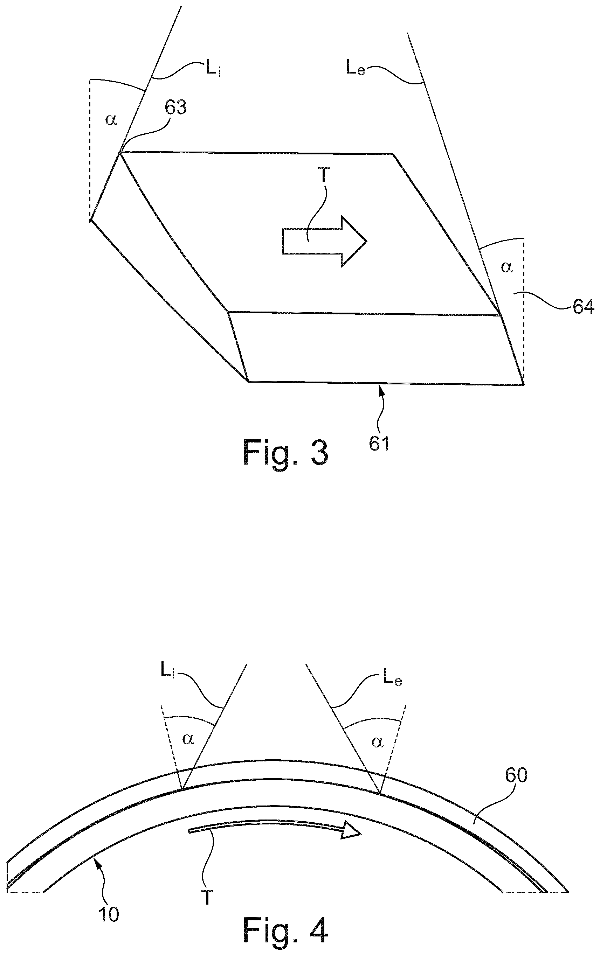

In Figur 1 ist eine sich beispielsweise mit konstanter Geschwindigkeit bewegende Materialbahn 60 beispielsweise aus Elektrodenmaterial gezeigt, die in Abschnitte bzw. Segmente 61, beispielsweise Elektrodenblätter, mit rechteckiger Grundfläche geschnitten werden soll. In Figur 1 ist die Länge a und die Breite b des zu schneidenden Segments 61 bzw. der zu schneidenden Elektrode dargestellt. Jede Elektrode weist an einer Seitenkante 66 der Materialbahn 60 jeweils eine Kontaktlasche 62 zum Kontaktieren der Elektrode in der fertigen Batteriezelle auf. Die Materialbahn 60 wird in einer Transportrichtung T auf einer in einer Rotationsrichtung R rotierend angetriebenen Schneidtrommel 10 (siehe Figuren 4 bis 13) transportiert.

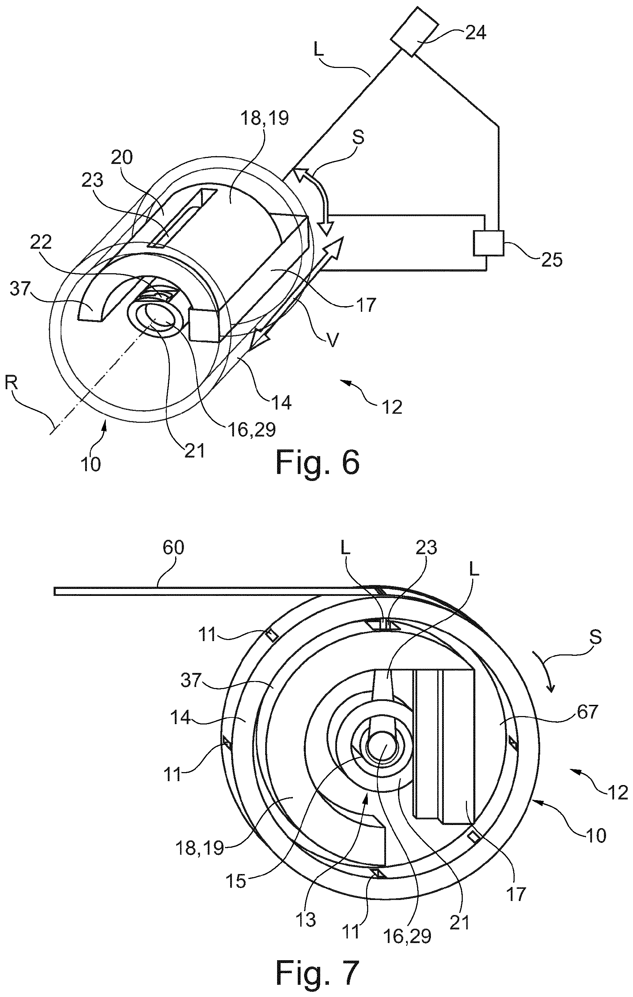

Wird ein Laser 24 (siehe Figuren 6, 8-13) so positioniert, dass der Fokuspunkt des Laserstrahles fest an der Stelle c auf der Schneidtrommel 10 und somit auf der Materialbahn 60 angeordnet ist, und lässt den Laserstrahl mittels Strahlführungselementen die Diagonale d abfahren, während die Schneidtrommel 10 rotiert, erhält man einen rechtwinkligen Schnitt auf der Materialbahn 60, da sich die Materialbahn 60 während des Schnitts in Transportrichtung T bewegt. Der Laserstrahl muss also zum rechtwinkligen Schneiden (Querschneiden) in einer Querrichtung Q über die Materialbahn 60 bewegt und gleichzeitig in der Transportrichtung T der bewegten Materialbahn 60 nachgeführt werden. Nach dem zuvor Gesagten wird der Schnitt somit entlang einer Diagonalen d vom Anfangspunkt 63 an einer Seitenkante 65 der Materialbahn 60 bis zum Endpunkt 64 an der anderen Seitenkante 66 der Materialbahn 60 ausgeführt. Selbstverständlich kann ein Schnitt auch in der anderen Richtung, d.h. von unten nach oben in Figur 1 durchgeführt werden.

Bei einer festen Position des Lasers 24 bzw. genauer des Austrittspunkts 34 steht dieser in Figur 1 in einem Punkt senkrecht über der zu schneidenden Materialbahn 60. In den Figuren 2 bis 5 bezeichnet Li den Laserstrahl zu Schnittbeginn, d.h. im Anfangspunkt 63, und Le den Laserstrahl am Schnittende, d.h. im Endpunkt 64. In den Figuren 2 bis 5 sind beide Laserstrahlen Li, Le gezeigt. Es versteht sich aber, dass zu jedem Zeitpunkt nur ein Laserstrahl L auf die Materialbahn 60 trifft.

In Figur 2 ist beispielhaft eine in einer Ebene, beispielsweise mittels eines Bandförderers, geförderte Materialbahn 60 gezeigt. Betrachtet man die zu schneidende Materialbahn 60 wie in Figur 2 von der Seite, kann man den entstehenden Schnittwinkel α zwischen dem Laserstrahl L, Li, Le und der Normalen zu der Materialbahnebene in einer Ebene senkrecht zur Rotationsachse der Schneidtrommel 10 sehen. (Ein weiterer Winkel zwischen Laserstrahl Li, Le und Normalen zur Materialbahn ergibt sich in einer Ebene senkrecht zu der Förderrichtung, dieser wird hier nicht betrachtet.) Das Ergebnis dieses Schnittvorgangs ist eine helixförmige bzw. in sich verwundene Schnittfläche, siehe Figur 3. Diese Schnittfläche kann dazu führen, dass scharfe Kanten des Schnittprodukts die Separatorfolie durchstechen und einen Kurzschluss erzeugen; dass Beschichtungsmaterial von der Schnittkante abbricht und die Oberfläche verschmutzt; dass die Einzelblätter oder die Monozellen nicht richtig zueinander ausgerichtet werden können; und/oder dass die geforderte Stapelgenauigkeit nicht erreicht wird. Sämtliche der aufgezählten Punkte können zu einer Funktionsminderung oder einem Funktionsverlust der fertigen Batteriezelle führen.

In Figur 4 ist im Vergleich eine auf einer Schneidtrommel 10 geförderte Materialbahn 60 in einer Querschnittsansicht gezeigt. Ein Schnitt auf einer Trommel 10 hat unter anderem wegen des einfacheren Transportes der geschnittenen Elektroden bzw. Segmente 61 Vorteile gegenüber einem Schnitt in der Ebene bzw. auf einem Bandförderer wie in Figur 2. Jedoch wird der Schnittwinkel α im Vergleich zu Figur 2 größer, wenn man die Materialbahn auf einer Trommel 10 mit einem feststehenden Laser von außen und beispielsweise Ablenkung des Laserstrahls L über Spiegel schneidet, wie aus Figur 4 ersichtlich ist.

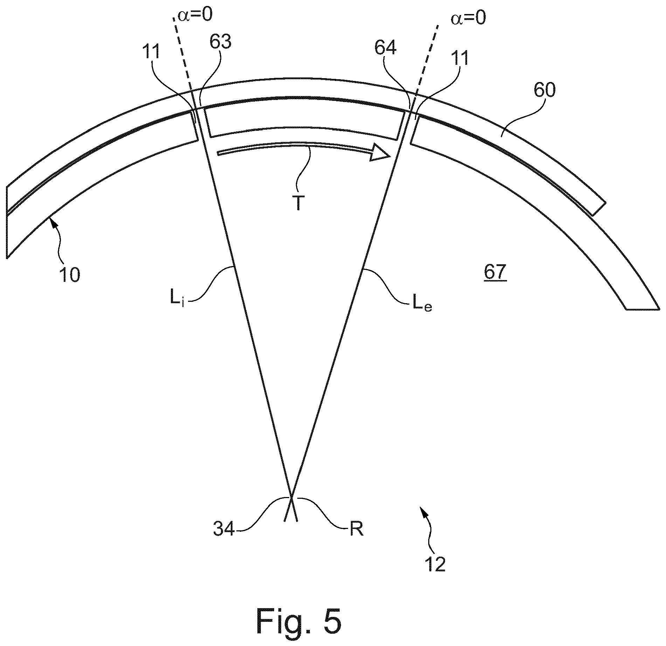

Nach einem Aspekt der Erfindung wird daher aus dem Innenraum 67 der Schneidtrommel 10 heraus geschnitten, wie in Figur 5 gezeigt. Der Austrittspunkt 34, also der Austrittspunkt des Laserstrahls aus einem optischen Laserstrahlführungssystem, oder der letzte Umlenkpunkt liegt somit im Trommelinneren 67, d.h. dem von dem Trommelmantel eingeschlossenen Raum. Auf diese Weise wird der Schnittwinkel α erheblich reduziert im Vergleich zu einem Schneiden von außen wie in Figur 4. Der Laserstrahl tritt von innen, d.h. ausgehend von dem Innenraum 67, durch eine Durchtrittsöffnung 11 in der Schneidtrommel 10 nach außen und trifft auf die am Außenumfang der Schneidtrommel 10 Materialbahn 60, um diese wie zuvor beschrieben zu schneiden. In der Figur 5 sind zwei Durchtrittsöffnungen 11 gezeigt, dabei handelt es sich jedoch um dieselbe Durchtrittsöffnung 11 zu unterschiedlichen Zeitpunkten, nämlich zum Schnittbeginn (links) und zum Schnittende (rechts). Vorteilhaft ist die Durchtrittsöffnung 11 ein diagonaler Spalt, entsprechend der Schnittdiagonale d in Figur 1. Insofern zeigt Figur 5 eigentlich zwei Querschnitte durch die Schneidtrommel 10, nämlich in der linken Hälfte einen Querschnitt durch den Angangspunkt 63 und in der rechten Hälfte einen Querschnitt durch den Endpunkt 64.

Idealerweise liegt der Austritts- oder Umlenkpunkt 34 auf der Mittel- oder Rotationsachse der Schneidtrommel 10, d.h. in einem Querschnitt in dem Trommelmittelpunkt M der Schneidtrommel 10, siehe Figur 5. Durch die Erfindung kann somit eine rechtwinklige Schnittfläche erzeugt werden, da in dieser Ausführungsform zu jedem Zeitpunkt des Schneidvorgangs der Schnittwinkel α = 0 ist. Auf die Position des Lasers, d.h. des Laserstrahlerzeugers, selbst kommt es dabei nicht an, dieser kann innerhalb oder vorteilhaft außerhalb der Schneidtrommel 10 angeordnet sein und beispielsweise axial oder axialparallel in die Schneidtrommel 10 einstrahlen. Der Laserstrahl wird vom Austritts- oder Umlenkpunkt 34 in einer Diagonalen, beispielsweise über einen Spiegel oder ein Umlenkelement, über die zu schneidende Materialbahn 60 geführt wie in Figur 1 gezeigt. Eine von der Trommelachse M abweichende Positionierung des Austritts- oder Umlenkpunkts 34 ist möglich, wenn ein von Null abweichender geringer Schnittwinkel α tolerierbar ist.

Eine vorteilhafte Ausführungsform einer erfindungsgemäßen Vorrichtung 12 zum Schneiden oder Perforieren einer Materialbahn 60 ist in den Figuren 6 und 7 gezeigt. Die Vorrichtung 12 umfasst die Schneidtrommel 10 und die Laserschneideinrichtung 13. Die Schneidtrommel 10 weist hier eine Mehrzahl von beispielsweise zwanzig unter gleichen Winkelabständen angeordnete Durchtrittsöffnungen 11 auf, die sich quer über die Breite der Schneidtrommel 10 erstrecken. In dieser Ausführungsform ist eine schwenkbare Einheit 19 vorgesehen, die in der Schneidtrommel 10 um deren Rotationsachse R schwenkbar gelagert ist und zu diesem Zweck einen Schwenkantrieb 20 aufweist. Die Schwenkbewegung der schwenkbaren Einheit 19 wird mit dem Pfeil S veranschaulicht. An der schwenkbaren Einheit 19 ist eine vorteilhaft mit der schwenkbaren Einheit 19 mitschwenkende Linearantriebseinheit 17 vorgesehen, die zur linearen Verschiebung eines Strahlumlenkungselements 16 entlang der oder parallel zu der Rotationsachse R eingerichtet und angeordnet ist.

Das Strahlumlenkungselement 16 dient zur Umlenkung des Laserstrahls L auf die Materialbahn 60 und ist vorzugsweise in einem beispielsweise röhrenförmigen Optikhalter 21 gehalten, der an der Linearantriebseinheit 17 befestigt ist. Die Linearverschiebung des Optikhalters 21 bzw. des Strahlumlenkungselements 16 wird durch den Pfeil V veranschaulicht. Das Strahlumlenkungselement 16 ist hier ein Spiegelelement 29, das unter 45° relativ zu der Rotationsachse R in dem Optikhalter 21 gehalten ist. Der Optikhalter 21 weist eine Durchgangsöffnung 22 auf, durch die der von dem Strahlumlenkungselement 16 reflektierte Laserstrahl L radial nach außen tritt.

Die schwenkbare Einheit 19 weist vorzugsweise eine entsprechende, beispielsweise längliche Durchgangsöffnung 23 auf, durch die der aus der Durchgangsöffnung 22 austretende Laserstrahl L radial nach außen hindurchtritt, um durch die entsprechende Durchtrittsöffnung 11 des Trommelmantels 14 (siehe Figur 7) hindurchzutreten und schließlich auf die der Schneidtrommel 10 zugewandte Seite der Materialbahn 60 zu treffen.

Die schwenkbare Einheit 19 dient gleichzeitig als Absaugeinrichtung 18, wobei durch das Laserschneiden erzeugte Partikel durch die Durchgangsöffnung 23 in die schwenkbare Einheit 19 eingesaugt und beispielsweise zu einer externen Filtereinheit abgeleitet werden. Weiterhin kann die schwenkbare Einheit 19 eine Drucklufteinrichtung aufweisen, die zur Erzeugung einer Querströmung senkrecht zum Laserstrahl eingerichtet ist, um durch das Laserschneiden erzeugte Partikel wegzublasen.

Die Laserschneideinrichtung 13 umfasst einen Laserstrahlerzeuger 24, der auch als Laserstrahlquelle oder kurz Laser bezeichnet werden kann. Der Laserstrahlerzeuger 24 ist so angeordnet, dass der von ihm erzeugte Laserstrahl L entlang der Rotationsachse R von einer Stirnseite her in die Schneidtrommel 10 eintritt und durch den Optikhalter 21 und darin gegebenenfalls enthaltene optische Elemente hindurchtritt, bis er auf das Umlenkelement 21 trifft und von diesem um 90° umgelenkt wird, so dass der Laserstrahl von der Rotationsachse R ausgehend radial nach außen tritt und durch die Durchgangsöffnungen 22, 23 hindurch schließlich auf die zu schneidende Materialbahn 60 trifft.

Im Folgenden wird der Ablauf zum Schneiden eines Segments 61 aus der Materialbahn 60 betrachtet. Zu Beginn ist das Strahlumlenkungselement 16 im Bereich einer Stirnseite der Trommel positioniert, so dass der Laserstrahl L an einer Seitenkante 65 der Materialbahn 60 die Materialbahnebene schneidet. Dies entspricht dem Angangspunkt 63 in Figur 1. Zum Schneiden der Materialbahn 60 verschiebt dann der Linearantrieb 17 den Optikhalter 21 bzw. das Strahlumlenkungselement 16 entlang der Rotationsachse R und somit entlang der optischen Achse des von dem Laser 24 einfallenden Laserstrahls L. Da während dieser Linearverschiebung die Schneidtrommel 10 rotiert, wird zum Ausgleich dieses Bahnvorschubs die schwenkbare Einheit 19 und mit ihr das Strahlumlenkungselement 16 mitgeschwenkt (in Schwenkrichtung S in Figur 7), wobei die Schwenkung und die Linearverschiebung des Strahlumlenkungselements 16 so aufeinander abgestimmt sind, dass der Laserstrahl jederzeit durch den Schneidspalt 11 der Schneidtrommel 10 fällt, um die Materialbahn in Querrichtung Q senkrecht zur Transportrichtung T verlaufend, kurz quer zu schneiden.

Wenn das Strahlumlenkungselement 16 an der anderen Seitenkante 66 der Materialbahn 60 angekommen ist (Endpunkt 64 in Figur 1), wird die schwenkbare Einheit 19 entgegen der Transportrichtung T (entgegen der Schwenkrichtung S) zurückgeschwenkt, ohne lineare Verschiebung durch den Linearantrieb 17, bis sich die schwenkbare Einheit 19 wieder an der ursprünglichen Rotationsposition befindet (entgegengesetzter Anfangspunkt 69 in Figur 1). Sodann erfolgt eine Verschiebung und Schwenkung Strahlumlenkungselements 16, wobei jedoch das Strahlumlenkungselement 16 in Gegenrichtung (entgegen der Querrichtung Q in Figur 1) linear verschoben wird, bis der Laserstrahl an dem entgegengesetzten Endpunkt 70 in Figur 1 angelangt ist. Auf dieser Weise wird somit schließlich ein rechteckiges Segment 61 zu erhalten. Es folgt ein weiteres Zurückschwenken der schwenkbare Einheit 19 in die ursprüngliche Ausgangsposition 63 und der Schneidvorgang beginnt von neuem.

Das bewegliche Strahlumlenkungselement 16 ist in dieser Ausführungsform ein linear verschiebbares und einachsig schwenkbares, nämlich um die Trommelachse R schwenkbares Spiegelelement 29.

Der Linearantrieb 17 führt somit eine Hin- und Her-Bewegung und der Schwenkantrieb 20 ein koordiniertes Vor- und Zurück-Schwenken des Strahlumlenkungselements 16 abhängig auch von der Produktions- bzw. Transportgeschwindigkeit der Materialbahn 60 aus, so dass ein zur Bahnlaufrichtung bevorzugt senkrecht bzw. quer verlaufender Schnitt durch die Materialbahn erzeugt werden kann. Die Koordination der Verschiebung V und der Schwenkung S wird durch eine elektronische Steuereinrichtung 25 gesteuert, die in Figur 6 bespielhaft gezeigt ist. Es versteht sich, dass eine solche elektronische Steuereinrichtung 25 auch in allen anderen Ausführungsformen zum koordinierten Verschieben und/oder Drehen oder Verschwenken der beweglich gelagerten Teile der Laserschneideinrichtung vorgesehen ist. Die digitale elektronische Steuereinrichtung 25 steuert den Linearantrieb 17 und den Schwenkantrieb 20 an und kann auch zur Ansteuerung des Lasers 24 dienen. Die digitale elektronische Steuereinrichtung 25 kann Teil der Maschinensteuerung einer Produktionsmaschine sein, in der die Vorrichtung 12 angeordnet ist. Da der Schnitt des Laserstrahls entlang der Materialbahn möglichst mit konstanter Geschwindigkeit erfolgen soll, wird in Abhängigkeit davon die Schwenkgeschwindigkeit des Strahlumlenkungselements 16 entsprechend gewählt und angepasst.

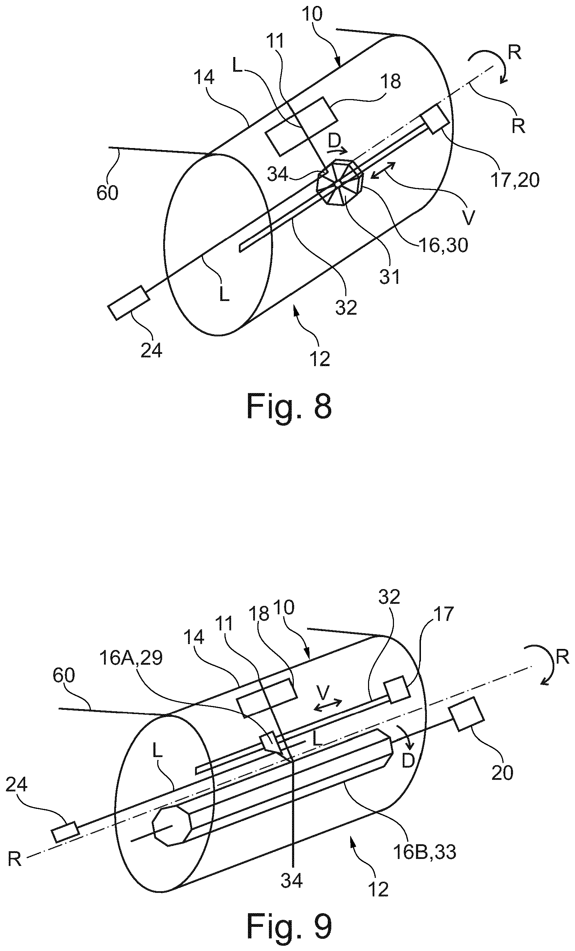

Eine weitere Ausführungsform einer erfindungsgemäßen Vorrichtung 12 ist in Figur 8 gezeigt. Diese unterscheidet sich von der Ausführungsform gemäß Figuren 6 und 7 darin, dass das Strahlumlenkungselement 16 anstelle eines einfachen Spiegelelements 29 ein Polygonspiegelelement 30 ist. Das Polygonspiegelelement 30 weist eine Mehrzahl von sektorförmigen Spiegelflächen 31 auf, die jeweils um 45° gegen die Trommelachse R geneigt sind. Das Polygonspiegelelement 30 ist entlang einer Achse 32 linear verschiebbar gelagert. Das Polygonspiegelelement 30 ist gleichzeitig um die Achse 32 drehbar gelagert. Dazu kann beispielsweise die Achse 32 drehbar als Welle ausgeführt sein. Linearantrieb 17 und Drehantrieb 20 sind in Fig. 8 nur schematisch gezeigt. Auch die Absaugeinrichtung 18, die beispielsweise raumfest angeordnet sein kann, ist in Figur 8 nur schematisch gezeigt.

Die Achse 32 ist gegen die Trommelachse R parallel versetzt, so dass der auf der Trommelachse R einfallende Laserstrahl auf eine der Spiegelflächen 31 fällt, dort um 90° umgelenkt wird und durch die Durchtrittsöffnung 11 in dem Trommelmantel 14 senkrecht auf die zu schneidende Materialbahn 60 fällt. Der Austritts- oder Umlenkpunkt 34, wo der Laserstrahl auf den Polygonspiegel trifft und letztmalig umgelenkt wird, liegt somit auf der Trommelachse R. Jede Spiegelfläche 31 entspricht genau einem Schnitt d über die Breite der Materialbahn 60 (siehe Figur 1). Zum Schneiden der Materialbahn 60 wird das Polygonspiegelelement 30 entlang der Linearachse 32 hin und her verschoben, wobei jede Hin-Bewegung und jede Her-Bewegung jeweils genau einem Schnitt d über die Breite der Materialbahn 60 (siehe Figur 1) entspricht. Zum Ausgleich des Bahnvorschubs durch die Trommelrotation R wird das Polygonspiegelelement 30 in der Drehrichtung D mit der Trommel synchron mitgedreht. Die Drehrichtung D des Polygonspiegelelements 30 und die Rotationsrichtung R der Schneidtrommel 10 sind somit identisch und ebenso die Drehgeschwindigkeiten bzw. Winkelgeschwindigkeiten.

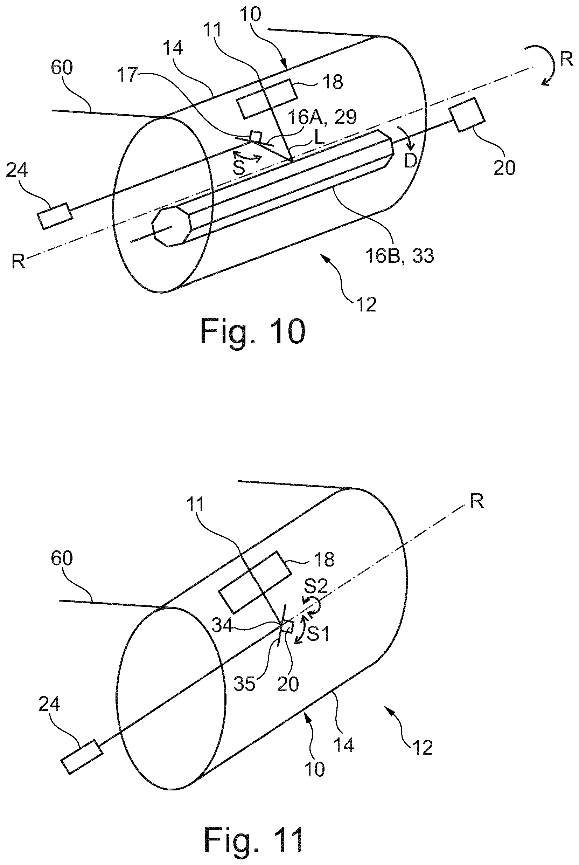

Die Ausführungsform gemäß Figur 8 (wie auch die gemäß Figuren 9 und 10) hat den Vorteil, dass das Polygonspiegelelement 30 fortlaufend mit konstanter Drehrichtung D gedreht werden kann und kein Hin- und Her-Schwenken wie in den Figuren 6 und 7 erforderlich ist.

Das bewegliche Strahlumlenkungselement 16 ist in dieser Ausführungsform ein linear verschiebbares und einachsig drehbares, nämlich um die Achse 32 parallel zu der Trommelachse R drehbares Polygonspiegelelement 31.

In der weiteren Ausführungsform gemäß Figur 9 sind zwei beweglich gelagerte Strahlumlenkungselemente 16A, 16B vorgesehen. Ein erstes Strahlumlenkungselement 16A ist ein entlang einer Linearachse 32 mittels eines Linearantriebs linear verschiebbares Spiegelelement 29, dessen um 45° zur Strahlachse des einfallenden Laserstrahls geneigt Spiegelfläche eine feste Orientierung im Raum aufweist, und somit nicht dreh- oder schwenkbar ist. Ein zweites Strahlumlenkungselement 16B ist ein Polygonspiegelelement in Form einer Polygonspiegelwalze 33. Zum Schneiden der Materialbahn 60 wird das Spiegelelement 29 entlang der Linearachse 32 verschoben. Der von dem Spiegelelement 29 reflektierte Laserstrahl L fällt auf die Polygonwalze, wird dort erneut reflektiert, tritt dann durch die Durchtrittsöffnung 11 und trifft schließlich senkrecht auf die Materialbahn 60, um diese zu schneiden. Durch die Linearverschiebung des Spiegelelements 29 fährt der Laserstrahl die Polygonwalze 33 in deren Längsrichtung pro Schnitt einmal ab. Die Polygonwalze 33 wird analog zu Figur 8 um die Drehachse D in Drehrichtung gedreht, um den Bahnvorschub durch die Rotation der Schneidtrommel 10 auszugleichen. Drehrichtung D und Winkelgeschwindigkeit der Polygonwalze 33 sind erneut gleich zu der Rotationsrichtung R und Winkelgeschwindigkeit der Schneidtrommel 10. Die Polygonwalze 33 ist so angeordnet, dass der Austritts- oder Umlenkpunkt 34, wo der Laserstrahl auf die Polygonwalze 33 trifft und dort letztmalig umgelenkt wird, zu jedem Zeitpunkt auf der Rotationsachse R liegt oder allenfalls minimal davon abweicht.

Die Ausführungsform gemäß Figur 9 verdeutlicht, dass die Funktion der linearen Verschiebung eines Strahlumlenkungselements 16A und der Drehung oder Schwenkung eines Strahlumlenkungselements 16A um eine zur Trommelachse R parallele Drehachse nicht zwingend von einem einzigen Strahlumlenkungselement 16 ausgeführt werden wie in den Figuren 6 bis 8, sondern für jede dieser Funktionen ein eigenes Strahlumlenkungselement 16A, 16B vorgesehen sein kann.

Die weitere Ausführungsform gemäß Fig. 10 verdeutlicht, dass für die Erfindung nicht zwingend ein linear verschiebbares Strahlumlenkungselement 16, 16A wie in den Figuren 6 bis 9 und vorgesehen sein muss. In dieser Ausführungsform ist ein erstes Strahlumlenkungselement 16A, nämlich ein einachsig in einer Schwenkrichtung S hin und her schwenkbares Spiegelelement 29 vorgesehen, sowie ein zweites Strahlumlenkungselement 16B in Form einer Polygonspiegelwalze 33, die genau wie die Polygonspiegelwalze 33 in Figur 9 eingerichtet und angeordnet ist. Das Abfahren der Polygonwalze 33 mit dem Laserstrahl L in Längsrichtung wird hier durch Schwenkung des Spiegelelements 29 um eine Querachse senkrecht zu der Trommelachse R erreicht.

In der Ausführungsform gemäß Fig. 11 ist ebenfalls kein linear verschiebbares Strahlumlenkungselement 16, 16A wie in den Figuren 6 bis 9 vorgesehen. Stattdessen ist hier ein um zwei Achsen schwenkbares Spiegelelement 35 vorgesehen, das auch als 2-Achsen-Scanelement bezeichnet werden kann. Der Laserstrahl L läuft auf der Trommelachse R ein, trifft in dem auf der Trommelachse R liegenden Austritts- oder Umlenkpunkt 34 auf das Spiegelelement 35, wird dort umgelenkt, tritt durch die Durchtrittsöffnung hindurch und trifft auf die zu schneidende Materialbahn 60. Der Schwenkantrieb 20 ist zur Schwenkung des Spiegelelements 35 um die Strahlachse des einfallen Laserstrahls und zur Schwenkung des Spiegelelements 35 um eine dazu senkrechte Querachse eingerichtet. Ein Schnitt über die Breite der Materialbahn 60 wird durch Schwenkung des Spiegelelements 35 um die Querachse und gleichzeitig, zur Kompensation des Bahnvorschubs durch die Rotation der Trommelachse R, durch Schwenkung um die Strahlachse durchgeführt.

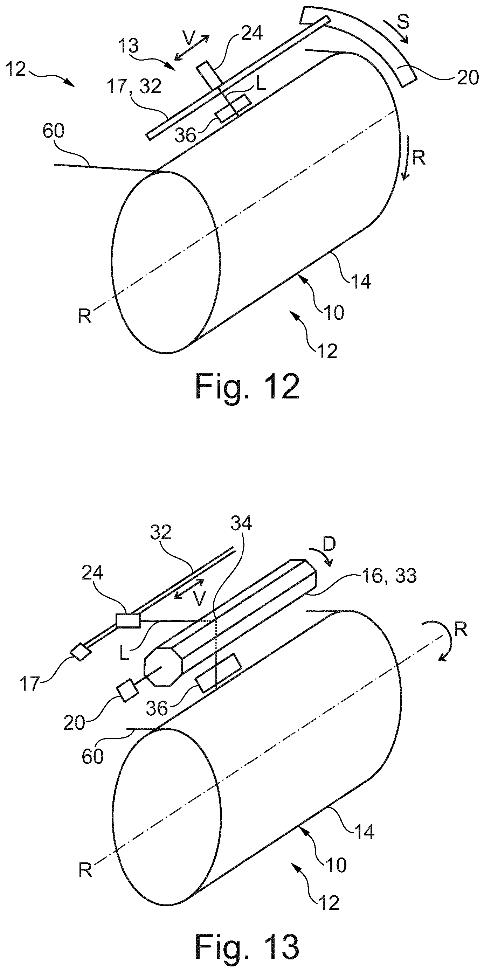

Eine weitere nicht erfindungsgemäße Ausführungsform gemäß Figur 12 verdeutlicht, dass der Laserstrahl L nicht zwingend von innen auf die zu schneidende Materialbahn 60 fallen muss, sondern auch ein Laserschneiden von außerhalb Schneidtrommel 10 möglich ist. Der Laser 24 ist mittels Linearantrieb 17 linear verschiebbar auf der Linearachse 32 gelagert, die parallel zu der Trommelachse R verläuft. Des Weiteren ist die Linearachse 32 und damit der Laser 24 mittels des Schwenkantriebs 20 um die Trommelachse R schwenkbar. Laser 24, Linearachse 32 und Schwenkantrieb 20 sind radial außerhalb des Trommelmantels 14 angeordnet. Ein Schnitt über die Breite der Materialbahn 60 wird durch lineares Hin- oder Her-Fahren des Lasers 24 quer über die Materialbahn 60 entlang der Linearachse 32 und gleichzeitig, zur Kompensation des Bahnvorschubs durch die Rotation der Schneidtrommel 10, durch Schwenkung in Schwenkrichtung S um die Trommelachse R durchgeführt. In dieser Ausführungsform ist nach Durchführung eines Schnitts ein Zurückschwenken der Linearachse 32 bzw. des Lasers 24 entgegen der Schneidschwenkrichtung S in die eine Ausgangsposition erforderlich, bevor der nächste Schnitt erfolgen kann, vergleichbar wie zu den Figuren 6 und 7 beschrieben. In dieser Ausführungsform wird der Laser 24 also hin und her bewegt und vor und zurück geschwenkt.

Die Ausführungsform gemäß Figur 12 verdeutlicht weiterhin, dass die Laserschneideinrichtung 13 nicht zwingend ein Strahlumlenkungselement 16, 16A, 16B aufweisen muss.

Die nicht erfindungsgemäße Ausführungsform gemäß Figur 13 hat den Vorteil, dass die Polygonspiegelwalze 33 fortlaufend mit konstanter Drehrichtung D gedreht werden kann und kein Hin- und Her-Schwenken wie in Figur 12 erforderlich ist. In dieser Ausführungsform ist der Laser 24 (alternativ ein erstes Strahlumlenkungselement 16A) entlang der Linearachse 32 mittels des Linearantriebs 17 linear verschiebbar gelagert. Ein Schnitt über die Breite der Materialbahn 60 wird durch lineares Hin- oder Her-Fahren des Lasers 24 quer über die Materialbahn 60 entlang der Linearachse 32 und gleichzeitig, zur Kompensation des Bahnvorschubs durch die Rotation der Schneidtrommel 10, durch Drehung der Polygonwalze 33 in Drehrichtung D um die Trommelachse R durchgeführt.

In der nicht erfindungsgemäßen Ausführungsform gemäß Figuren 12 und 13 ist vorteilhaft eine Absaugvorrichtung 36 zum Absaugen von durch das Laserschneiden entstandenen Partikeln außerhalb der Schneidtrommel 10 angeordnet. Eine solche kann zusätzlich auch in den Ausführungsformen vorgesehen sein, in denen von innen geschnitten wird (Figuren 6 bis 11).

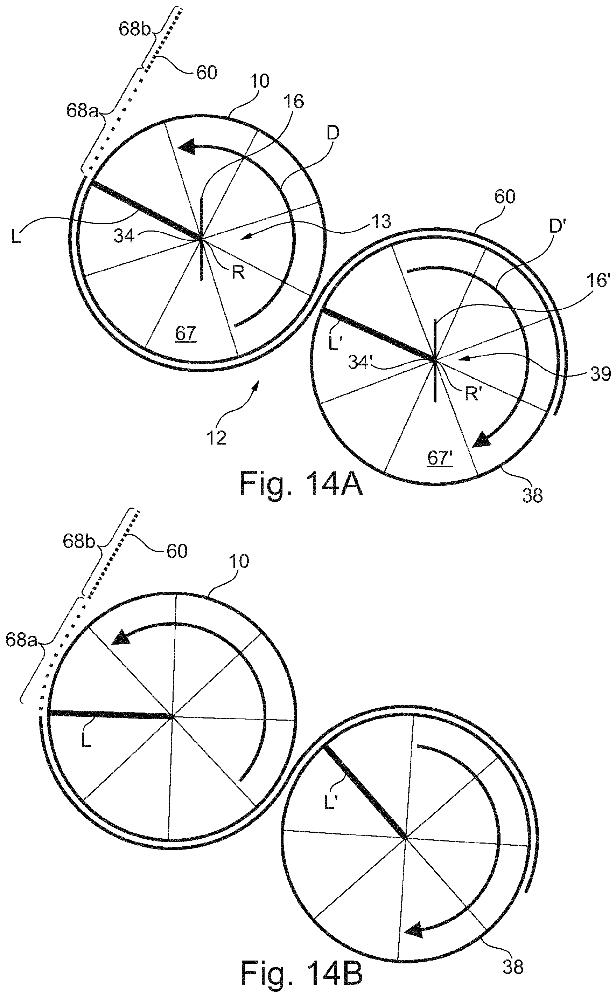

In der Ausführungsform gemäß den Figuren 14A bis 14G weist die erfindungsgemäße Vorrichtung 12 eine Mehrzahl von hier zwei, vorzugsweise hintereinander geschalteten Schneidtrommeln 10, 38 auf. Zu jeder Schneidtrommel 10, 38 ist eine entsprechende, nur schematisch gezeigte Laserschneideinrichtung 13, 39 vorgesehen, die angeordnet und eingerichtet ist, den entsprechenden Laserstrahl L, L' aus dem jeweiligen Inneren der Schneidtrommel 10, 38 durch nicht gezeigte Durchtrittsöffnungen 11 (siehe Figur 5) auf die Materialbahn 60 zu richten, um diese in Segmente 61 zu schneiden. Die Laserschneideinrichtungen 13, 39 können separate Einrichtungen sein und jeweils eigene Laser 24 und Strahlführungssysteme aufweisen. Alternativ können die Laserschneideinrichtungen 13, 39 gemeinsame Elemente aufweisen, beispielsweise einen Laser 24, und mindestens teilweise separate Strahlführungssysteme, beispielsweise separate Umlenkelemente 16, 16'. Die Austritts- oder Umlenkungspunkte 34, 34' der Laserschneideinrichtungen 13, 39 liegen vorzugsweise jeweils auf der Rotationsachse R, R' der jeweiligen Schneidtrommel 10, 38.

Die hier gegenläufigen Drehrichtungen D, D' der Schneidtrommeln 10, 38 sind in Fig. 14A mittels Pfeilen gezeigt. Die Materialbahn 60 zu der Schneidtrommel 10 zugeführt und nach einer Umschlingung von vorzugsweise mindestens 90°, weiter vorzugsweise mindesten 135° und beispielsweise 180° wird die Materialbahn 60 bzw. die mit der Laserschneideinrichtung 13 bzw. dem Laserstrahl L daraus geschnittenen Segmente 61 an die weitere Schneidtrommel 38 übergeben. Im vorliegenden Beispiel sind die Schneidtrommeln 10, 38 zur Aufnahme von acht Segmenten 61 bemessen, selbstverständlich sind andere Teilungen und Bemessungen für mehr oder weniger als acht Segmente möglich.

Im Folgenden wird das Schneiden der Materialbahn 60 in Segmente 61a, 61b, 61c, ... in einer vorteilhaften Ausführungsform anhand der zeitlichen Abfolge gemäß den Figuren 14A bis 14G beschrieben.

In Figur 14A wird die Materialbahn 60 mit den Bahnabschnitten 68a, 68b, ... angeliefert, wobei jeder Bahnabschnitt 68a, 68b, ... einem zu schneidenden Segment 61a, 61b, ... entspricht. Der Laserstrahl L der Schneidtrommel 10 ist beispielsweise auf den Übergabepunkt der Materialbahn 60 auf die Schneidtrommel 10 gerichtet. Der Laserstrahl L' der Schneidtrommel 38 ist beispielsweise auf den Übergabepunkt der Materialbahn 60 von der Schneidtrommel 10 auf die weitere Schneidtrommel 38 gerichtet.

In Figur 14A startet das Laserschneiden der Materialbahn 60 mit dem Laserstrahl L auf der Schneidtrommel 10. Der Schneidprozess wird durch lineare Verschiebung und gleichzeitige Schwenkung des Umlenkelements 16, das der Übersichtlichkeit wegen nur in Figur 14A gezeigt ist, durchgeführt, wie unter Bezugnahme auf die Figuren 6-9 beschrieben.

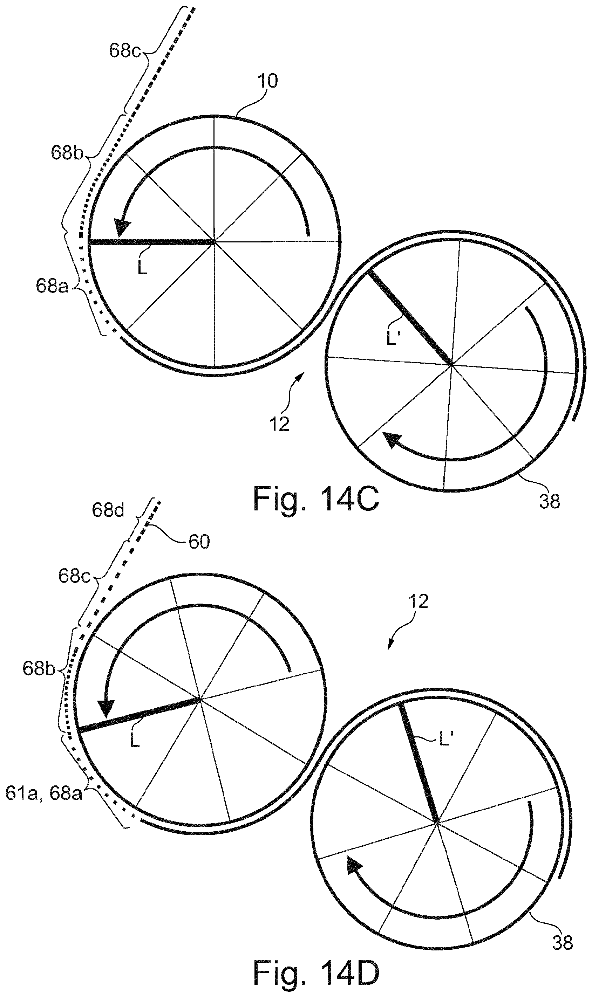

In Figur 14B ist der in Figur 14A begonnene Schnitt beendet. Der Laserstrahl L kann in dieser Position beispielsweise stehen bleiben (keine weitere Verschiebung und Schwenkung), bis die in Figur 14C gezeigte Rotationsposition der Schneidtrommeln 10, 38 erreicht ist, in der der Laserstrahl L die nächste Durchtrittsöffnung 11 entsprechend dem Ende des ersten Bahnabschnitts 68a erreicht hat. Alternativ ist es möglich, dass der Laserstrahl mit verringerter Geschwindigkeit weiter geschwenkt wird, zurückgeschwenkt wird oder eine andere geeignete Bewegung ausführt. In jedem Fall wird der Laserstrahl vor Schnittbeginn in die notwendige Ausgangslage gebracht und in seiner Bewegung mit der Geschwindigkeit der zu schneidenden Materialbahn synchronisiert.

Es ist denkbar, dass in der Zeit zwischen den Figuren 14B und 14C der Laserstrahl L die Innenseite des Trommelmantels der Schneidtrommel 10 überstreicht und dort absorbiert wird. Vorteilhaft ist stattdessen jedoch ein zwischenzeitliches Ausschalten des Lasers 24. Denkbar ist auch ein zwischenzeitliches Unterbrechen (beispielsweise mittels Shutter) oder Absorbieren des Laserstrahls L.

In Figur 14C startet wiederum das Laserschneiden der Materialbahn 60 mit dem Laserstrahl L auf der Schneidtrommel 10, durch lineare Verschiebung und gleichzeitige Schwenkung des Umlenkelements 16, wie zuvor. In Figur 14D ist der in Figur 14C begonnene Schnitt beendet, so dass der Bahnabschnitt 68a vollständig geschnitten und somit ein Bahnsegment 61a erzeugt ist. Der Laserstrahl L kann in dieser Position wiederum ausgeschaltet werden, bis eine Rotationsposition der Schneidtrommeln 10, 38 erreicht ist, in der der Laserstrahl L die nächste Durchtrittsöffnung 11 entsprechend dem Ende des nächsten Bahnabschnitts 68b erreicht hat, um sodann mit einem weiteren Schnitt der Bahnabschnitt 68b vollständig zu schneiden und somit ein weiteres Bahnsegment 61b zu erzeugen.

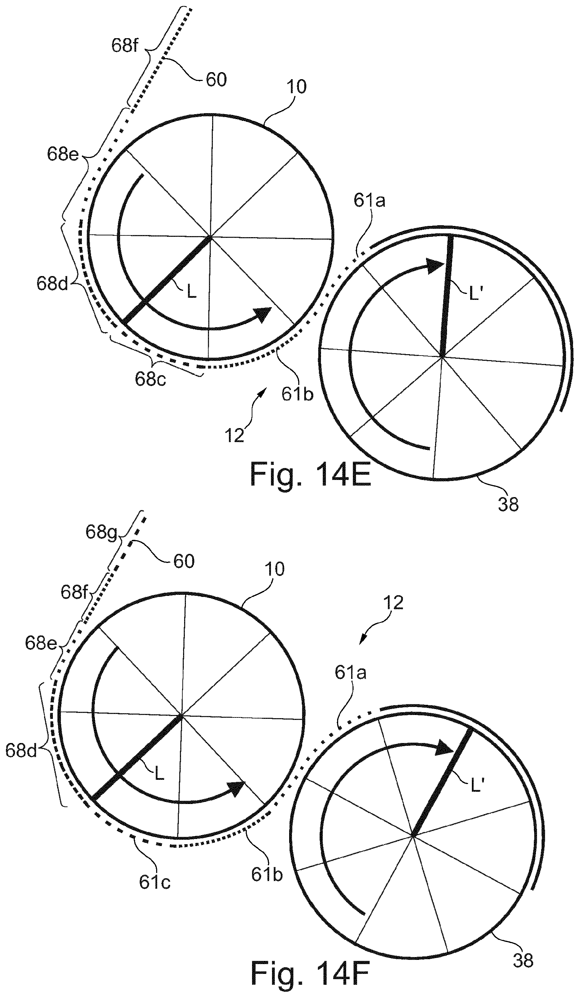

Nachdem der Bahnabschnitt 68b vollständig geschnitten ist, wird der Laserstrahl L wiederum ausgeschaltet, bis der Laserstrahl L die nächste Durchtrittsöffnung 11 entsprechend dem Ende des nächsten Bahnabschnitts 68c erreicht hat. Diese Position ist in Fig. 14E gezeigt. In dieser Position wird das Segment 61a von der Schneidtrommel 10 auf die weitere Schneidtrommel 38 übergeben. Diese Übergabe ist in Figur 14F abgeschlossen, in der auch der Schnitt des Bahnabschnitts 68c abgeschlossen und das Segment 61c erzeugt ist.

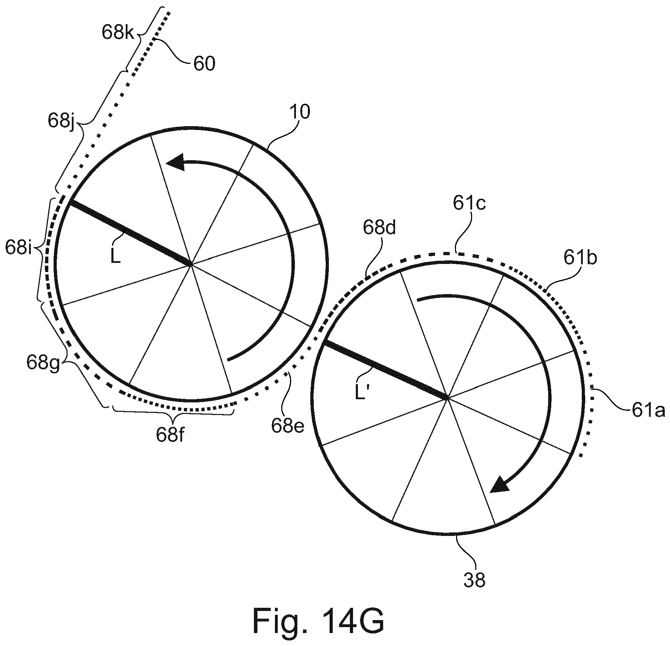

Nach dem Schneiden des Segments 61c ist der erste Schneidvorgang abgeschnitten und der Laserstrahl L wird durch Schwenkung des Strahlumlenkungselements 16 in die in Fig. 14A gezeigte Ausgangsposition zurückgeschwenkt. Der Zustand nach Abschluss der Schwenkbewegung ist in Fig. 14G gezeigt. In diesem Zeitpunkt beginnt der Laserstrahl L das Schneiden des Bahnabschnitts 68j und der Laserstrahl L' vollendet das Schneiden des Bahnabschnitts 68d. Anschließend vollendet der Laserstrahl L das Schneiden des Bahnabschnitts 68j und schneidet weiterhin die Bahnabschnitte 68k und 68l, der Laserstrahl L' schneidet weiterhin die Bahnabschnitte 68e, 68f und 68g. Danach ist der zweite Schneidvorgang beendet und die Laserstrahlen L, L' schwenken erneut in die in Fig. 14A, 14G gezeigte Ausgangsposition zurück.

In der Ausführungsform gemäß den Figuren 14A-14G werden wie beschrieben mehrere aufeinanderfolgende Schnitte auf jeder Schneidtrommel 10, 38 durchgeführt. Der Schwenkantrieb der Laserschneideinrichtung bleibt nach jedem Schnitt stehen und wartet einen Takt, bis die Laserschneideinrichtung wieder anfängt zu schneiden. Hierbei können beispielhaft vier (allgemein m) Schnitte in Folge auf der Schneidtrommel 10 durchgeführt werden. Nach den vier (m) Schnitten kann die Schwenkeinheit auf ihren Startpunkt zurückschwenken. Die nachgeordnete Schneidtrommel 38 macht die nächsten vier (m) Schnitte, sodass die Schneidtrommeln 10, 38 immer im Wechsel arbeiten.

Das Schneiden und/oder das Zurückschwenken der Laserstrahlen L, L' kann synchron wie in Fig. 14A-14G, oder zeitlich versetzt erfolgen.

In der Ausführungsform gemäß den Figuren 14A-14G beträgt der Arbeitsbereich der Laserstrahls L, L' beispielsweise jeweils 90° (vgl. Figuren 14A und 14F). Andere Arbeitsbereiche sind möglich. In einer besonders vorteilhaften Ausführungsform ist der Arbeitsbereich der Laserstrahlen größer als 180°, vorzugsweise mindestens 225°, weiter vorzugsweise mindestens 270°. In diesem Fall müssen die Laserstrahlen L, L' nicht zeitaufwändig zurückschwenken, sondern können um die vollen 360° umlaufend ausgebildet sein, was zu einer erhöhten Produktionsgeschwindigkeit beträgt.

Hier werden also so viele Schnitte auf einer Schneidtrommel 10, 38 ausgeführt, dass der Laserendpunkt (vgl. Fig. 14F) deutlich mehr als 180° vom Laserstartpunkt (vgl. Fig. 14A) entfernt liegt, beispielhaft 270°. Der Schwenk erfolgt nun nicht mehr entgegen der Drehrichtung der Schneidtrommel, sondern mit der Drehrichtung (Vorwärtsschwenk). Durch den reduzierten Schwenk kann ein großer Zeitgewinn erzielt werden. Auch hierfür sind mindestens zwei Schneidtrommeln erforderlich, wobei auf einer Schneidtrommel beispielsweise zehn Schnitte durchgeführt werden, um die 270° zu erreichen.

In der Ausführungsform gemäß den Figuren 14A-14G sind zwei Schneidtrommeln 10, 38 vorgesehen. Die Zahl der Schneidtrommeln ist nicht auf zwei beschränkt, es können auch mehr als zwei Schneidtrommeln mit jeweils einer Laserschneideinrichtung vorgesehen sein.

In den zuvor beschriebenen Ausführungsformen kann eine Laservorrichtung gemäß Figur 4 der EP 3 415 265 B1 zum Einsatz kommen. Dabei kann die Laservorrichtung ausgebildet sein, den Laserstrahl von außen auf den Trommelkörper zu lenken, wie dort gezeigt. Eine solche Laservorrichtung kann aber auch dazu ausgebildet sein, den Laserstrahl von innen durch den Trommelkörper zu lenken; die Anordnung, Ausrichtung und/oder die Drehachsen der dort gezeigten Bauteile 400, 402, 404, 406, 408, 410 sind dann entsprechend anzupassen.

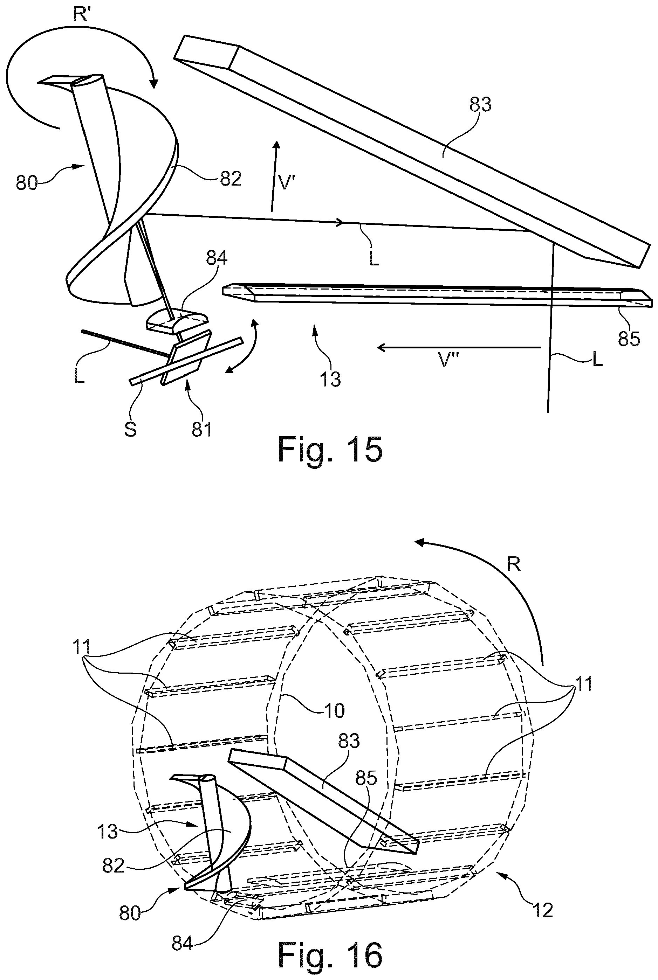

Eine weitere vorteilhafte Ausführungsform einer Laserschneideinrichtung 13 ist in den Figuren 15 und 16 gezeigt. Dabei weist die Laserschneideinrichtung 13 einen rotierbaren Helixspiegel 80 auf, mit dem eine lineare Verschiebung des auf die zu schneidende Materialbahn fallenden Laserstrahls L in einer zur der Trommelachse R parallelen Verschieberichtung V" vorteilhaft realisiert werden kann. Eine Helix- oder Wendelfläche 82 des Helixspiegels 80 ist mindestens einseitig verspiegelt. Der Laserstrahl L fällt auf die verspiegelte Wendelfläche 82 des Helixspiegels 80 und wird von diesem umgelenkt. Aufgrund der antreibbaren Rotation R' des Helixspiegels 80 um seine Mittelachse tritt der an der Wendelfläche 82 gespiegelte Laserstrahl L an unterschiedlichen Axialpositionen aus dem Helixspiegel 80 aus. Diese lineare Verschiebung V' des aus dem Helixspiegel austretenden Laserstrahls L kann beispielsweise über ein raumfestes Umlenkelement 83 zum Überstreichen der zu schneidenden Materialbahn 60 mit dem Laserstrahl L, und somit zum Schneiden der Materialbahn 60, in Querrichtung eingesetzt werden. Bei der in Figur 15 angegebenen Drehrichtung R' des Helixspiegels bewegt sich der Laserstrahl L linear von rechts nach links entlang der Trommelachse R, die parallel zu der dargestellten Verschieberichtung V" liegt.

Das Umlenkelement 83 ist vorzugsweise länglich und erstreckt sich über Breite der Schneidtrommel 10 (siehe Figur 16), so dass der Laserstrahl L infolge der Drehung des Helixspiegels 80 entlang dem Umlenkelement 83. Das Umlenkelement 83 ist vorteilhaft mit einer Neigung relativ zur Trommelachse R der Schneidtrommel 10 angeordnet, um einen geeigneten Schnittwinkel des auf die Materialbahn 60 fallenden Laserstrahls einzustellen, vorzugsweise nahe 90°.

Ausführungsformen ohne Umlenkelement 83 sind möglich, wenn beispielsweise der Helixspiegel 80 mit seiner Rotationsachse etwa parallel zu der Trommelachse R der Schneidtrommel 10 angeordnet ist.

Zum Ausgleich der Rotationsbewegung der Schneidtrommel 10 während des Schneidens weist die Laserschneideinrichtung 13 vorteilhaft ein im Strahlengang vor dem Helixspiegel 80 angeordnetes, beispielsweise einachsiges Scanelement 81 auf. Das Scanelement 81 ist um mindestens eine Schwenkachse S schwenkbar. Das Scanelement 81 ist positionsgenau zur Lage der Schneidtrommel 10 ausgerichtet und wird der Schneidtrommel 10 in Abhängigkeit der Produktions- oder Rotationsgeschwindigkeit nachgeführt. Der von dem Scanelement 81 ausgehende Laserstrahl L kann infolge der Verstellung durch das Scanelement 81 radial auf der Wendelfläche 82 des Helixspiegels 80 laufen, von innen nach außen oder umgekehrt. Das Scanelement 81 kann vorzugsweise ein elektromagnetisch verstellbarer Spiegel sein, beispielsweise ein Galvanometerscanner. Andere Ausführungen des Scanelements 81 sind möglich, beispielsweise in Form von Piezoaktoren.

Da der Helixspiegel 80 im Betrieb vorzugsweise mit konstanter Drehzahl betrieben werden kann und das Umschalten des Schneidstrahles L von Schnittende auf den nächsten Schnittbeginn automatisch über die Drehbewegung des Helixspiegels 80 erfolgt, können problemlos hohe Schnittgeschwindigkeiten realisiert werden. Während demnach der Helixspiegel 80 vorzugsweise permanent mit konstanter Geschwindigkeit rotiert, wird die korrekte Schnittlage mit dem Scanelement 81 verfolgt.

Mit dem zuvor beschriebenen Aufbau mit Helixspiegel 80 und vorgeordnetem Scanelement 81 ist es möglich, die erforderlichen Schnittgeschwindigkeiten zu realisieren und den Laserstrahl L entsprechend der Schneidtrommel 10 nachzuführen. Gelöst wird die zugrundeliegende Aufgabe demnach durch den Einsatz eines Helixspiegels 80 für die schnelle Achse und den Einsatz eines Scanelements 81 für die langsame Achse.

Die Fokussierung des Laserstrahls L kann beispielsweise mittels mindestens einer Linse 84, insbesondere einer Zylinderlinse, erfolgen, die zwischen dem Scanelement 81 und dem Helixspiegel 80 im Strahlengang angeordnet ist. Der Helixspiegel 80 ist vorzugsweise so angeordnet, dass die Länge des Strahlwegs vom (ersten) Fokuspunkt bis zum Produkt unabhängig von der Rotation des Helixspiegels 80 immer konstant ist. Der Strahlweg zwischen erster Linse 84 und zu schneidender Materialbahn 60 ist somit an allen Positionen gleich lang.

In der Ausführungsform gemäß den Figuren 15 und 16 ist eine weitere Zylinderlinse 85 in Strahlrichtung nach dem Helixspiegel 80 und vor der Schneidtrommel 10 angeordnet. Dargestellt ist die Fokussierung des Laserstrahles L mit zwei Zylinderlinsen 84, 85 mit passend gewählten Brennweiten, es ist jedoch auch möglich, den Strahl über eine einzelne Linse 84 zu fokussieren, die zwischen dem Scanelement 81 und dem Helixspiegel 80 positioniert ist.

Figur 16 zeigt eine bevorzugte Anordnung der Laserschneideinrichtung 13 innerhalb der Schneidtrommel 10, so dass vom Inneren der Trommel heraus geschnitten wird. Eine Anordnung der Laserschneideinrichtung 13 außerhalb der Schneidtrommel 10 ist ebenfalls möglich. Die Materialbahn 60 läuft über die Schneidtrommel 10, während der Laserstrahl L im 90°-Winkel zur Außenkante der Materialbahn 60 zur Erstellung des Schnittes bewegt wird.

Es sind sowohl einzelne Überfahrten des Laserstrahles L zur Erzeugung eines Schnittes möglich, als auch mehrere. Nach einer kompletten Umdrehung des Helixspiegels 80 springt der Strahl L automatisch in die Ausgangslage zurück, gegebenenfalls mit einem gewünschten Offset zur Schnittlageverfolgung durch das Scanelement 81.

## Patentansprüche

1. Vorrichtung (12) zum Schneiden oder Perforieren einer Materialbahn für die Energiezellen produzierende Industrie, umfassend einen um eine Rotationsachse (R) rotierbaren Schneidkörper, insbesondere eine Schneidtrommel (10), auf der eine Materialbahn (60) in einer Transportrichtung (T) transportiert wird, und eine Laserschneideinrichtung (13) zum Schneiden der Materialbahn (60) quer zu der Transportrichtung (T), d.h. in Querrichtung Q senkrecht zur Transportrichtung T verlaufend, zur Erzeugung einzelner Segmente (61) mittels eines Laserstrahls (L), wobei die Laserschneideinrichtung (13, 39) zum linearen und zu der Rotationsachse (R) des Schneidkörpers (10, 38) parallelen Verschieben des auf die zu schneidende Materialbahn (60) fallenden Laserstrahls eingerichtet ist, wobei die Laserschneideinrichtung (13) so angeordnet und eingerichtet ist, dass der Laserstrahl (L) aus einem Körperinneren, insbesondere Trommelinneren (67) des Schneidkörpers (10) heraus auf einen Körpermantel, insbesondere Trommelmantel (14) des Schneidkörpers (10) gerichtet ist, **dadurch gekennzeichnet, dass** der Körpermantel, insbesondere Trommelmantel (14) mindestens eine Durchtrittsöffnung (11) aufweist, so dass der aus dem Körperinneren, insbesondere Trommelinneren (67) durch die mindestens eine Durchtrittsöffnung (11) nach außen tretende Laserstrahl (L) auf die zu schneidende Materialbahn (60) trifft, und dass
- die Vorrichtung (12) eine Absaugeinrichtung (18) aufweist, die zum Absaugen durch das Laserschneiden erzeugter Partikel aus dem Körperinneren, insbesondere Trommelinneren (67) angeordnet und eingerichtet ist, und/oder
- außen über dem Schneidkörper (10) eine Absaugvorrichtung (36) zum Absaugen durch das Laserschneiden erzeugter Partikel angeordnet ist.

2. Vorrichtung nach Anspruch 1, **dadurch gekennzeichnet, dass** die Laserschneideinrichtung (13) so angeordnet und eingerichtet ist, dass der Laserstrahl (L) von der Rotationsachse (R) des Schneidkörpers (10) ausgehend auf die Materialbahn (60) trifft.

3. Vorrichtung nach Anspruch 1 oder 2, **dadurch gekennzeichnet, dass** mindestens ein Teil (16; 24; 29; 30) der Laserschneideinrichtung (13) parallel zu der Rotationsachse (R) des Schneidkörpers (10) linear verschiebbar gelagert ist.

4. Vorrichtung nach Anspruch 3, **dadurch gekennzeichnet, dass** die Vorrichtung einen Linearantrieb (17) und/oder eine Linearachse (32) zum linearen Verschieben des verschiebbaren Teils (16; 24; 29; 30) während des Schnitts aufweist.

5. Vorrichtung nach einem der vorangehenden Ansprüche, **dadurch gekennzeichnet, dass** mindestens ein Teil (16; 24; 30; 33; 35) der Laserschneideinrichtung (13) um die Rotationsachse (R) des Schneidkörpers (10), oder um eine dazu parallele Dreh- oder Schwenkachse (D), dreh- oder schwenkbar gelagert ist.

6. Vorrichtung nach Anspruch 5, **dadurch gekennzeichnet, dass** die Vorrichtung einen Dreh- oder Schwenkantrieb (20) zum Drehen oder Schwenken des dreh- oder schwenkbaren Teils (16; 24; 29; 30; 33; 35) während des Schnitts aufweist.

7. Vorrichtung nach einem der Ansprüche 3 bis 6, **dadurch gekennzeichnet, dass** der verschiebbare und/oder dreh- oder schwenkbare Teil (16; 24; 29; 30; 33; 35) der Laserschneideinrichtung (13) mindestens ein Strahlumlenkelement (16; 16A, 16B) umfasst.

8. Vorrichtung nach einem der Ansprüche 3 bis 7, **dadurch gekennzeichnet, dass** der verschiebbare und/oder dreh- oder schwenkbare Teil der Laserschneideinrichtung (13) ein nichtschwenkbares, einachsig schwenkbares oder zweiachsig schwenkbares Spiegelelement (29; 35) umfasst.

9. Vorrichtung nach einem der Ansprüche 3 bis 8, **dadurch gekennzeichnet, dass** der verschiebbare und/oder dreh- oder schwenkbare Teil der Laserschneideinrichtung (13) ein Polygonspiegelelement (30) und/oder eine Polygonspiegelwalze (33) umfasst.

10. Vorrichtung nach einem der vorangehenden Ansprüche, **dadurch gekennzeichnet, dass** die Laserschneideinrichtung (13) einen rotierbaren Helixspiegel (80) aufweist.

11. Vorrichtung nach Anspruch 10, **dadurch gekennzeichnet, dass** die Laserschneideinrichtung (13) ein im Strahlengang vor dem Helixspiegel (80) angeordnetes Scanelement (81) aufweist.

12. Vorrichtung nach einem der vorangehenden Ansprüche, **dadurch gekennzeichnet, dass** mindestens ein Teil der Absaugeinrichtung (18), die zum Absaugen durch das Laserschneiden erzeugter Partikel aus dem Körperinneren, insbesondere Trommelinneren (67) angeordnet und eingerichtet ist, mit dem Laserstrahl (L) oder mit einem beweglichen Teil der Laserschneideinrichtung (13) verschiebbar und/oder dreh- oder schwenkbar gelagert ist.

13. Vorrichtung nach einem der vorangehenden Ansprüche, **dadurch gekennzeichnet, dass** die die Vorrichtung (12) eine Drucklufteinrichtung (37) zum Wegblasen von der Laserschneideinrichtung erzeugter Partikel, insbesondere mittels einer Querluftströmung senkrecht zum Laserstrahl, aufweist.

14. Vorrichtung nach einem der vorangehenden Ansprüche, **dadurch gekennzeichnet, dass** die mindestens eine Durchtrittsöffnung (11) in dem Körpermantel, insbesondere Trommelmantel (14) zur Schneidstaubabsaugung und/oder gegebenenfalls als Prozessgaszufuhr dient.

15. Vorrichtung nach einem der vorangehenden Ansprüche, **dadurch gekennzeichnet, dass** die mindestens eine Durchtrittsöffnung (11) ein sich quer über die Breite des Schneidkörpers (10) erstreckender Spalt in dem Körpermantel, insbesondere Trommelmantel (14) ist.

16. Vorrichtung nach einem der vorangehenden Ansprüche, **dadurch gekennzeichnet, dass** der Körpermantel, insbesondere Trommelmantel (14) eine Mehrzahl von Durchtrittsöffnungen (11) aufweist, die jeweils den gleichen Winkelabstand voneinander aufweisen.

17. Vorrichtung nach einem der vorangehenden Ansprüche, **dadurch gekennzeichnet, dass** die Vorrichtung (12) mindestens einen weiteren Schneidkörper, insbesondere eine weitere Schneidtrommel (38) und mindestens eine weitere Laserschneideinrichtung (39) aufweist.

18. Vorrichtung nach Anspruch 17, **dadurch gekennzeichnet, dass** der weitere Schneidkörper (38) eines oder mehrere Merkmale des Schneidkörpers (10) gemäß einem der Ansprüche 1 bis 16 und/oder die weitere Laserschneideinrichtung (39) eines oder mehrere Merkmale der Laserschneideinrichtung (13) nach einem der Ansprüche 1 bis 16 aufweist.

19. Vorrichtung nach Anspruch 17 oder 18, **dadurch gekennzeichnet, dass** mindestens ein Teil (16') der weiteren Laserschneideinrichtung (39) um die Rotationsachse (R') des weiteren Schneidkörpers (38), oder um eine dazu parallele Dreh- oder Schwenkachse (D'), dreh- oder schwenkbar, vorzugsweise um volle 360° drehbar, gelagert ist.

20. Vorrichtung nach Anspruch 19, **dadurch gekennzeichnet, dass** die Schneidkörper (10, 38) und/oder mindestens ein Teil (16, 16') der Laserschneideinrichtungen (13, 39) zur Schwenkung oder Rotation mit nicht-konstanter Rotationsgeschwindigkeit, insbesondere mit periodischen Brems- und Beschleunigungsvorgängen, eingerichtet sind.

## Claims

1. Apparatus (12) for cutting or perforating a material web for the energy cell manufacturing industry, comprising a cutting body, in particular a cutting drum (10), rotatable about a rotation axis (R), on which cutting body a material web (60) is transported in a transport direction (T), and a laser cutting device (13) for cutting the material web (60) transversely to the transport direction (T), i.e., extending in the transverse direction Q perpendicular to the transport direction T, for producing individual segments (61) by means of a laser beam (L), wherein the laser cutting device (13, 39) is designed to move, linearly and parallel to the rotation axis (R) of the cutting body (10, 38), the laser beam which falls on the material web (60) which is to be cut, wherein the laser cutting device (13) is arranged and designed so that the laser beam (L) is directed out from an inside of the body, in particular inside of the drum (67), of the cutting body (10) onto a body casing, in particular drum casing (14), of the cutting body (10), **characterized in that** the body casing, in particular drum casing (14), has at least one through-opening (11) so that the laser beam (L) which emerges from the inside of the body, in particular inside of the drum (67), through the at least one through-opening (11) strikes the material web (60) to be cut, and **in that**
- the apparatus (12) has a suction device (18) which is arranged and designed for suctioning particles produced by the laser cutting from the inside of the body, in particular inside of the drum (67), and/or
- a suction apparatus (36) for suctioning particles produced by the laser cutting is arranged on the outside above the cutting body (10).

2. Apparatus according to claim 1, **characterized in that** the laser cutting device (13) is arranged and designed so that the laser beam (L), starting from the rotation axis (R) of the cutting body (10), strikes the material web (60).

3. Apparatus according to claim 1 or 2, **characterized in that** at least one part (16; 24; 29; 30) of the laser cutting device (13) is mounted so as to be linearly movable parallel to the rotation axis (R) of the cutting body (10).

4. Apparatus according to claim 3, **characterized in that** the apparatus has a linear drive (17) and/or a linear axle (32) for linearly moving the movable part (16; 24; 29; 30) during the cut.

5. Apparatus according to any of the preceding claims, **characterized in that** at least one part (16; 24; 30; 33; 35) of the laser cutting device (13) is mounted so as to be turnable or pivotable about the rotation axis (R) of the cutting body (10), or so as to be turnable or pivotable about a turning or pivot axis (D) parallel to the rotation axis.

6. Apparatus according to claim 5, **characterized in that** the apparatus has a turning or pivot drive (20) for turning or pivoting the turnable or pivotable part (16; 24; 29; 30; 33; 35) during the cut.

7. Apparatus according to any of claims 3 to 6, **characterized in that** the movable and/or turnable or pivotable part (16; 24; 29; 30; 33; 35) of the laser cutting device (13) comprises at least one beam deflection element (16; 16A, 16B).

8. Apparatus according to any of claims 3 to 7, **characterized in that** the movable and/or turnable or pivotable part of the laser cutting device (13) comprises a non-pivotable, uniaxially pivotable or biaxially pivotable mirror element (29; 35).

9. Apparatus according to any of claims 3 to 8, **characterized in that** the movable and/or turnable or pivotable part of the laser cutting device (13) comprises a polygonal mirror element (30) and/or a polygonal mirror cylinder (33).

10. Apparatus according to any of the preceding claims, **characterized in that** the laser cutting device (13) has a rotatable helical mirror (80).

11. Apparatus according to claim 10, **characterized in that** the laser cutting device (13) has a scanning element (81) arranged in the beam path in front of the helical mirror (80).

12. Apparatus according to any of the preceding claims, **characterized in that** at least one part of the suction device (18) which is arranged and designed for suctioning particles produced by the laser cutting from the inside of the body, in particular inside of the drum (67), is mounted so as to be movable and/or turnable or pivotable together with the laser beam (L) or together with a movable part of the laser cutting device (13).

13. Apparatus according to any of the preceding claims, **characterized in that** the apparatus (12) has a compressed air device (37) for blowing away, in particular by means of a transverse airflow perpendicular to the laser beam, particles produced by the laser cutting device.

14. Apparatus according to any of the preceding claims, **characterized in that** the at least one through-opening (11) in the body casing, in particular drum casing (14), is used for suctioning cutting dust and/or, optionally, as process gas supply.

15. Apparatus according to any of the preceding claims, **characterized in that** the at least one through-opening (11) is a gap extending transversely across the width of the cutting body (10) in the body casing, in particular drum casing (14).

16. Apparatus according to any of the preceding claims, **characterized in that** the body casing, in particular drum casing (14), has a plurality of through-openings (11) which each have the same angular distance from one another.

17. Apparatus according to any of the preceding claims, **characterized in that** the apparatus (12) has at least one further cutting body, in particular a further cutting drum (38), and at least one further laser cutting device (39).

18. Apparatus according to claim 17, **characterized in that** the further cutting body (38) has one or more features of the cutting body (10) according to any of claims 1 to 16 and/or the further laser cutting device (39) has one or more features of the laser cutting device (13) according to any of claims 1 to 16.

19. Apparatus according to claim 17 or 18, **characterized in that** at least one part (16') of the further laser cutting device (39) is mounted so as to be turnable or pivotable, preferably turnable through a full 360°, about the rotation axis (R') of the further cutting body (38), or about a turning or pivot axis (D') parallel to the rotation axis.

20. Apparatus according to claim 19, **characterized in that** the cutting bodies (10, 38) and/or at least one part (16, 16') of the laser cutting devices (13, 39) are designed to pivot or rotate at non-constant rotation speed, in particular having periodic braking and acceleration processes.

## Revendications

1. Dispositif (12) destiné à découper ou à perforer une bande de matériau pour l'industrie de fabrication de cellules énergétiques, comprenant un corps de découpe pouvant tourner autour d'un axe de rotation (R), en particulier un tambour de découpe (10), sur lequel une bande de matériau (60) est transportée dans une direction de transport (T), et un moyen de découpe au laser (13) pour découper la bande de matériau (60) transversalement à la direction de transport (T), c'est-à-dire dans une direction transversale Q perpendiculaire à la direction de transport T, afin de former des segments individuels (61) à l'aide d'un faisceau laser (L), le moyen de découpe au laser (13, 39) étant conçu pour déplacer de manière linéaire et parallèle à l'axe de rotation (R) du corps de découpe (10, 38) le faisceau laser incident sur la bande de matériau (60) à découper, le moyen de découpe au laser (13) étant disposé et conçu de telle sorte que le faisceau laser (L) soit dirigé depuis un intérieur de corps, en particulier un intérieur de tambour (67) du corps de découpe (10), vers une enveloppe de corps, en particulier une enveloppe de tambour (14) du corps de découpe (10), **caractérisé en ce que** l'enveloppe de corps, en particulier l'enveloppe de tambour (14), présente au moins une ouverture de passage (11), de sorte que le faisceau laser (L) sortant de l'intérieur de corps, en particulier de l'intérieur de tambour (67), vers l'extérieur à travers ladite au moins une ouverture de passage (11), atteint la bande de matériau (60) à découper, et **en ce que**
- le dispositif (12) présente un moyen d'aspiration (18) qui est disposé et conçu pour aspirer depuis l'intérieur de corps, en particulier l'intérieur de tambour (67), les particules générées par la découpe au laser, et/ou
- un dispositif d'aspiration (36) destiné à aspirer les particules générées par la découpe au laser est disposé à l'extérieur, au-dessus du corps de découpe (10).

2. Dispositif selon la revendication 1, **caractérisé en ce que** le moyen de découpe au laser (13) est disposé et conçu de telle sorte que le faisceau laser (L) atteint la bande de matériau (60) à partir de l'axe de rotation (R) du corps de découpe (10).

3. Dispositif selon la revendication 1 ou 2, **caractérisé en ce qu'**au moins une partie (16 ; 24 ; 29 ; 30) du moyen de découpe au laser (13) est montée de manière à pouvoir coulisser linéairement parallèlement à l'axe de rotation (R) du corps de découpe (10).

4. Dispositif selon la revendication 3, **caractérisé en ce que** le dispositif présente un entraînement linéaire (17) et/ou un axe linéaire (32) pour le coulissement linéaire de la partie coulissante (16 ; 24 ; 29 ; 30) pendant la découpe.

5. Dispositif selon l'une quelconque des revendications précédentes, **caractérisé en ce qu'**au moins une partie (16 ; 24 ; 30 ; 33 ; 35) du moyen de découpe au laser (13) est montée de manière à pouvoir tourner ou pivoter autour de l'axe de rotation (R) du corps de découpe (10) ou autour d'un axe de rotation ou de pivotement (D) parallèle à celui-ci.

6. Dispositif selon la revendication 5, **caractérisé en ce que** le dispositif présente un entraînement en rotation ou pivotement (20) destiné à faire tourner ou pivoter la partie rotative ou pivotante (16 ; 24 ; 29 ; 30 ; 33 ; 35) pendant la découpe.

7. Dispositif selon l'une quelconque des revendications 3 à 6, **caractérisé en ce que** la partie coulissante et/ou rotative ou pivotante (16 ; 24 ; 29 ; 30 ; 33 ; 35) du moyen de découpe au laser (13) comprend au moins un élément de déviation de faisceau (16 ; 16A, 16B).

8. Dispositif selon l'une quelconque des revendications 3 à 7, **caractérisé en ce que** la partie coulissante et/ou rotative ou pivotante du moyen de découpe au laser (13) comprend un élément miroir (29 ; 35) non pivotant, pivotant selon un axe ou pivotant selon deux axes.

9. Dispositif selon l'une quelconque des revendications 3 à 8, **caractérisé en ce que** la partie coulissante et/ou rotative ou pivotante du moyen de découpe au laser (13) comprend un élément miroir polygonal (30) et/ou un rouleau miroir polygonal (33).

10. Dispositif selon l'une quelconque des revendications précédentes, **caractérisé en ce que** le moyen de découpe au laser (13) présente un miroir hélicoïdal rotatif (80).

11. Dispositif selon la revendication 10, **caractérisé en ce que** le moyen de découpe au laser (13) présente un élément de balayage (81) disposé en amont du miroir hélicoïdal (80) dans le trajet du faisceau.

12. Dispositif selon l'une quelconque des revendications précédentes, **caractérisé en ce qu'**au moins une partie du moyen d'aspiration (18), qui est disposé et conçu pour aspirer les particules générées par la découpe au laser depuis l'intérieur de corps, en particulier l'intérieur de tambour (67), est montée de manière à pouvoir coulisser et/ou tourner ou pivoter avec le faisceau laser (L) ou avec une partie mobile du moyen de découpe au laser (13).

13. Dispositif selon l'une quelconque des revendications précédentes, **caractérisé en ce que** le dispositif (12) présente un moyen à air comprimé (37) pour évacuer par soufflage les particules générées par le moyen de découpe au laser, en particulier au moyen d'un flux d'air transversal perpendiculaire au faisceau laser.

14. Dispositif selon l'une quelconque des revendications précédentes, **caractérisé en ce que** ladite au moins une ouverture de passage (11) dans l'enveloppe de corps, en particulier l'enveloppe de tambour (14), sert à l'aspiration de la poussière de découpe et/ou, le cas échéant, à l'alimentation en gaz de processus.

15. Dispositif selon l'une quelconque des revendications précédentes, **caractérisé en ce que** ladite au moins une ouverture de passage (11) est une fente s'étendant transversalement sur la largeur du corps de découpe (10) dans l'enveloppe de corps, en particulier l'enveloppe de tambour (14).

16. Dispositif selon l'une quelconque des revendications précédentes, **caractérisé en ce que** l'enveloppe de corps, en particulier l'enveloppe de tambour (14), présente une pluralité d'ouvertures de passage (11) qui présentent le même écart angulaire les unes par rapport aux autres.

17. Dispositif selon l'une quelconque des revendications précédentes, **caractérisé en ce que** le dispositif (12) présente au moins un autre corps de découpe, en particulier un autre tambour de découpe (38), et au moins un autre moyen de découpe au laser (39).

18. Dispositif selon la revendication 17, **caractérisé en ce que** l'autre corps de découpe (38) présente une ou plusieurs caractéristiques du corps de découpe (10) selon l'une quelconque des revendications 1 à 16 et/ou l'autre moyen de découpe au laser (39) présente une ou plusieurs caractéristiques du moyen de découpe au laser (13) selon l'une quelconque des revendications 1 à 16.

19. Dispositif selon la revendication 17 ou 18, **caractérisé en ce qu'**au moins une partie (161) de l'autre moyen de découpe au laser (39) est montée de manière à pouvoir tourner ou pivoter autour de l'axe de rotation (R') de l'autre corps de découpe (38), ou autour d'un axe de rotation ou de pivotement (D') parallèle à celui-ci, de préférence sur un angle complet de 360°.

20. Dispositif selon la revendication 19, **caractérisé en ce que** les corps de découpe (10, 38) et/ou au moins une partie (16, 16') des moyens de découpe au laser (13, 39) sont conçus pour pivoter ou tourner à une vitesse de rotation non constante, en particulier avec des opérations périodiques de freinage et d'accélération.
